# EUROPEAN PATENT SPECIFICATION

(11) **EP 2 329 556 B1**
(45) Date of publication and mention of the grant of the patent: **13.12.2017**
(21) Application number: 09810511.7
(22) Date of filing: 25.08.2009
(51) Int. Cl.: H01M 8/22, C01B 3/32, C01B 3/36, C01B 3/38, B01J 12/00, B01J 19/24, H01M 8/06, H01M 8/04, H01M 6/44, H01M 16/00

(54) **FUEL CELL SYSTEMS INCLUDING HYDROGEN-PRODUCING ASSEMBLIES**
BRENNSTOFFZELLENSYSTEME MIT WASSERSTOFFERZEUGENDEN ANORDNUNGEN
SYSTÈMES DE PILES À COMBUSTIBLE COMPRENANT DES ENSEMBLES PRODUISANT DE L HYDROGÈNE

(30) Priority: 03.11.2008 US 110693 P; 24.08.2009 US 546579; 26.08.2008 US 92038 P
(43) Date of publication of application: 08.06.2011
(73) Proprietor: DCNS, 75015 Paris (FR)
(72) Inventor: CHEN, Zhen, Bend OR 97701 (US); OUYANG, Xun, Bend OR 97702 (US); RENN, Curtiss, Bend OR 97701 (US); STURKO, Ryan, Thomas, Bend OR 97701 (US)
(74) Representative: HGF Limited
(86) International application number: PCT/US2009/054925
(87) International publication number: WO 2010/025145

(56) References cited:
- EP-A1- 0 450 872
- WO-A2-2006/050335
- US-A- 4 363 787
- US-A1- 2003 192 251
- US-A1- 2006 147 771
- US-B1- 6 180 081
- US-B1- 6 221 117
- US-B2- 6 746 790
- DATABASE WPI Week 199125 Thomson Scientific, London, GB; AN 1991-181310 XP002721229, & JP H03 109202 A (NGK INSULATORS LTD) 9 May 1991 (1991-05-09)

## Description

### Field of the Disclosure

The present disclosure is directed generally to hydrogen-producing assemblies, fuel cell systems including the same, methods of producing hydrogen gas, and methods of powering an energy-consuming device, and more particularly to hydrogen-producing assemblies that include a conductive monolithic body that defines at least a burner conduit and a reformer conduit in a conductive heat exchange relationship with the burner conduit within the monolithic body, fuel cell systems including the same, methods of producing hydrogen gas using the same, and methods of powering an energy-consuming device using the same and a fuel cell stack.

### Background of the Disclosure

Hydrogen-producing fuel processing systems, or assemblies, include a series of devices or components that produce hydrogen gas as a primary reaction product from one or more reactants, or feedstocks. The fuel processing system includes a fuel processing assembly with a hydrogen-producing region that is adapted to convert the one or more feedstocks into a product stream containing hydrogen gas as a majority component. In operation, the hydrogen-producing region is typically operated at an elevated temperature and pressure and contains a suitable catalyst to produce at least hydrogen gas from the feedstock(s) delivered thereto. The produced hydrogen gas may be used in a variety of applications. One such application is energy production, such as by electrochemical fuel cells. An electrochemical fuel cell is a device that converts a fuel and an oxidant to electricity, a reaction product, and heat. For example, fuel cells may convert hydrogen and oxygen gases into water and electricity. In such fuel cells, the hydrogen gas is the fuel, the oxygen gas is the oxidant, and the water is the reaction product. Fuel cells are typically coupled together to form a fuel cell stack.

Hydrogen-producing fuel processing assemblies and systems typically include a series of interconnected functional components that collectively produce hydrogen gas from one or more reactants, or feedstocks, such as a carbon-containing feedstock and/or water. These components include at least one reactor, or reforming region, in which hydrogen gas is produced by chemical reaction of the feedstock(s), which may be delivered to the reforming region in one or more feed streams by a pump or other suitable feedstock delivery system. When a feedstock is a liquid feedstock at ambient conditions, the functional components may include a vaporizer, or vaporization region. A heating assembly, such as a burner, may consume a fuel to produce a combustion exhaust stream that may be used to heat at least the vaporization region, such as at least to a suitable temperature to vaporize the liquid feed stock. When the reforming region utilizes an endothermic reaction, such as a steam reforming reaction, the combustion exhaust stream may be utilized to heat the reforming region to at least a minimum hydrogen-producing temperature. The reformate stream produced by the reforming region may be delivered to a fuel cell stack, and optionally may first be delivered to a separation assembly to increase the hydrogen purity of the stream that is delivered to a fuel cell stack.

Typically, the components of the fuel processing assembly and/or fuel processing system are discrete components that include individual shells or housings and which are interconnected by tubing or similar fluid conduits, fittings, and the like. The entire fuel processing system may be enclosed in a system enclosure or system housing, but the individual components typically are positioned in a spaced-apart relationship within the housing, with the housing defining an open chamber, or cavity, within which the individual components are positioned. The separate structures of these components, and the fluid conduits used to seal and interconnect these components, contribute to the number of parts, potential leak points, assembly time, and manufacturing expense of the fuel processing system. Also, the spatially separated orientation of conventional fuel processing assemblies also increases the thermal management needs of the fuel processing system. These needs may be exacerbated by the conventional use of steel alloy housings for components of at least the fuel processing assembly, such as at least the vaporization region and reforming or other hydrogen-producing region thereof. Due to the low thermal conductivity of steel alloys, the surface area of the housing often has to be largely enhanced (e.g., through finned tubes or plate heat exchangers) or a high heat transfer rate has to be imposed on these components (e.g., through direct flame impingement), which may result in increased design cost or lower reliability, respectively.

### Summary of the Disclosure

Hydrogen-producing assemblies, fuel processing systems, and fuel cell systems according to the present disclosure are designed to efficiently utilize heat generated by a heating source in the production of hydrogen gas. Accordingly, hydrogen-producing assemblies according to the present disclosure include a monolithic body that defines at least a reforming conduit, in which a feed stream is catalyzed into a reformate gas stream containing hydrogen gas as a primary component, and a burner conduit, in which a fuel-air stream is combusted. The monolithic body is constructed to conduct heat generated by the exothermic reaction of the combustion from the burner conduit to the reformer conduit, which is positioned in a conductive heat exchange relationship, or position, within the monolithic body relative to the burner conduit. In some hydrogen-producing assemblies according to the present disclosure, the monolithic body further defines a vaporizer conduit, in which liquid portions of the feed stream are vaporized prior to being delivered to the reformer conduit. In such embodiments, the monolithic body is constructed to conduct heat from the burner conduit to the vaporizer conduit. In some hydrogen-producing assemblies according to the present disclosure, the burner conduit extends along a central longitudinal axis of the monolithic body, and the reformer conduit and vaporizer conduit (when present) are spaced radially from the burner conduit in a concentric pattern through the monolithic body.

Methods of producing hydrogen gas using hydrogen-producing assemblies according to the present disclosure, and methods of powering an energy-consuming device using a hydrogen-producing assembly according to the present disclosure and a fuel cell stack are also disclosed.

In a first aspect of the invention is provided a hydrogen-producing assembly (12), comprising:
a heat conductive body (140) having a length and defining:
   a reforming conduit (210) extending longitudinally through the heat conductive body (140);
   a feed inlet (214) to the reforming conduit (210) for receiving a feed stream (16) into the reforming conduit (210);
   a reformate outlet (216) from the reforming conduit (210) for delivering a reformate gas stream (20) containing hydrogen gas from the reforming conduit (210);
   a burner conduit (212) extending through the heat conductive body (140) along a central longitudinal axis therein and adjacent the reforming conduit (210), wherein the reforming conduit (210) is spaced radially from the burner conduit (212);
   a fuel-air inlet (218) to the burner conduit (212) for receiving a fuel-air stream (64) into the burner conduit (212); and
   an exhaust outlet (220) from the burner conduit (212) for delivering an exhaust stream (66) from the burner conduit (212);
a reforming catalyst (23) disposed within the reforming conduit (210) and configured to catalyze production of the reformate gas stream (20) from the feed stream (16) via an endothermic reaction within a reforming temperature range;
a combustion catalyst (202) disposed within the burner conduit (212) only adjacent to the exhaust outlet, and configured to catalyze ignition of the fuel-air stream (64) via an exothermic reaction; and
a fuel-air mixing structure (204) disposed within the burner conduit (212) and configured to support combustion of the fuel-air stream (64) in a combustion region of the burner conduit (212) adjacent the fuel-air inlet (218); and
wherein the heat conductive body (140) extends between the burner conduit (212) and the reforming conduit (210), surrounds the burner conduit (212) and the reformer conduit (210) and is constructed to conduct heat generated by the exothermic reaction of the combustion of the fuel-air stream (64) in the burner conduit (212) from the burner conduit (212) to the reforming conduit (210) to maintain the reforming catalyst (23) within the reforming temperature range.

In a second aspect of the invention is provided a fuel cell system (42), comprising:
a hydrogen-producing assembly (12) of the first aspect; and
a fuel cell stack (40) in fluid communication with the reformate outlet (216) of the heat conductive body (140) of the hydrogen-producing assembly (12) and configured to produce an electrical output from an oxidant and at least a portion of the hydrogen gas of the reformate gas stream to power an energy-consuming device (46);
optionally wherein the fuel cell system (42) is configured to provide backup power to the energy-consuming device (46) in response to a primary power source becoming unavailable to power the energy-consuming device (46).

In a third aspect of the invention is provided the use to produce hydrogen of hydrogen-producing assembly (12), comprising:
a monolithic body (143) having a length and defining:
   a reforming conduit (210) extending longitudinally through the monolithic body (143);
   a feed inlet (214) to the reforming conduit (210) for receiving a feed stream
      (16) into the reforming conduit (210);
   a reformate outlet (216) from the reforming conduit (210) for delivering a
      reformate gas stream (20) containing hydrogen gas from the reforming conduit (210);
   a burner conduit (212) extending longitudinally through the monolithic body
      (143) and adjacent the reforming conduit (210);
   a fuel-air inlet (218) to the burner conduit (212) for receiving a fuel-air stream
      64) into the burner conduit (212); and
   an exhaust outlet (220) from the burner conduit (212) for delivering an
      exhaust stream (66) from the burner conduit (212);
a reforming catalyst (23) disposed within the reforming conduit (210) and configured to catalyze production of the reformate gas stream (20) from the feed stream (16) via an endothermic reaction within a reforming temperature range;
wherein the reforming conduit (210) is spaced radially from the burner conduit (212); a combustion catalyst (202) disposed within the burner conduit (212) only adjacent to the exhaust outlet (220) and configured to catalyze ignition of the fuel-air stream (64) via an exothermic reaction; and
a fuel-air mixing structure (204) disposed within the burner conduit (212) and configured to support combustion of the fuel-air stream (64) in a combustion region of the burner conduit (212) adjacent the fuel-air inlet (218);
wherein the monolithic body (143) extends between the burner conduit (212) and the reforming conduit (210), surrounds the burner conduit (212) and the reformer conduit (210) and is constructed to conduct heat generated by the exothermic reaction of the combustion of the fuel-air stream (64) in the burner conduit (212) from the burner conduit (212) to the reforming conduit (210) to maintain the reforming catalyst (23) within the reforming temperature range.

In a fourth aspect of the invention is provided a method of producing hydrogen gas, the method comprising:
delivering a fuel-air stream (64) to a burner conduit (212) extending longitudinally through a heat conductive body (140) having a length;
catalyzing, by a combustion catalyst (202) disposed within the burner conduit (212) only adjacent to the exhaust outlet (220), ignition of the fuel-air stream (64) in the burner conduit (212);
supporting combustion of the fuel-air stream (64) in a combustion region of the burner conduit (212) to produce an exhaust stream (66);
delivering a feed stream (16) to a reforming conduit (210) extending longitudinally through the heat conductive body (140) and adjacent the burner conduit (212);
conducting heat generated by the exothermic reaction of the combustion of the fuel-air stream (64) in the burner conduit (212) to the reforming conduit (210);
catalyzing, by a reforming catalyst (23) in the reforming conduit (210), production of a reformate gas stream (20) containing hydrogen gas from the feed stream (16); and
maintaining the reforming catalyst (23) within a reforming temperature range at least partially from the heat conducted from the burner conduit (212);
wherein the heat conductive body (140) extends between the burner conduit (212) and the reforming conduit (210), surrounds the burner conduit (212) and the reformer conduit (210); and wherein the burner conduit (212) extends along a central longitudinal axis of the heat conductive body (140) and the reformer conduit (210) is spaced radially from the burner conduit.

### Brief Description of the Drawings

Fig. 1 is a schematic diagram of hydrogen-producing fuel processing systems according to the present disclosure, schematically illustrated together with an optional fuel cell stack for powering an energy-consuming device.
Fig. 2 is a schematic diagram of illustrative, non-exclusive examples of hydrogen-producing assemblies according to the present disclosure.
Fig. 3 is another schematic diagram of illustrative, non-exclusive examples of hydrogen-producing assemblies according to the present disclosure.
Fig. 4 is a somewhat schematic exploded cross-sectional diagram of illustrative, non-exclusive examples of hydrogen-producing assemblies according to the present disclosure.
Fig. 5 is a schematic cross-sectional view of an illustrative non-exclusive example of a hydrogen-producing assembly according to the present disclosure.
Fig. 6 is a schematic cross-sectional view of another illustrative non-exclusive example of a hydrogen-producing assembly according to the present disclosure.
Fig. 7 is a schematic cross-sectional view of another illustrative non-exclusive example of a hydrogen-producing assembly according to the present disclosure.
Fig. 8 is a schematic cross-sectional view of another illustrative non-exclusive example of a hydrogen-producing assembly according to the present disclosure.
Fig. 9 is an exploded perspective view of an illustrative, non-exclusive example of a hydrogen-producing assembly according to the present disclosure.
Fig. 10 is a perspective view of another illustrative, non-exclusive example of a hydrogen-producing assembly according to the present disclosure.
Fig. 11 is a cross-sectional view of the heat transfer body of the hydrogen-producing assembly of Fig. 10, taken generally along line 11--11 in Fig. 12.
Fig. 12 is another cross-sectional view of the heat transfer body of the hydrogen-producing assembly of Fig. 10, taken generally along line 12--12 in Fig. 10.
Fig. 13 is a cross-sectional view of another illustrative, non-exclusive example of a heat transfer body of a hydrogen-producing assembly according to the present disclosure, taken generally along line 13-13 in Fig. 14.
Fig. 14 is another cross-sectional view of the heat transfer body of Fig. 13, with the cross-section similar to the cross-section of Fig. 12.
Fig. 15 is a cross-sectional view of another illustrative, non-exclusive example of a heat transfer body of a hydrogen-producing assembly according to the present disclosure.
Fig. 16 is a cross-sectional view of another illustrative, non-exclusive example of a heat transfer body of a hydrogen-producing assembly according to the present disclosure.
Fig. 17 is a schematic diagram of a fuel cell system according to the present disclosure, schematically illustrated together with an energy-consuming device.

### Detailed Description and Best Mode of the Disclosure

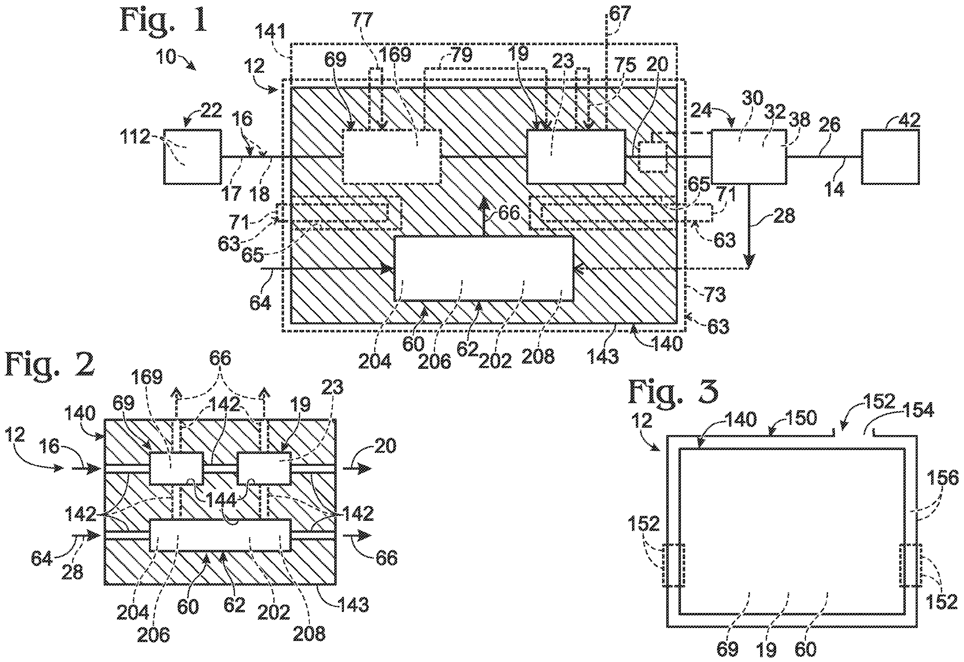

Fuel processing systems according to the present disclosure are schematically illustrated in Fig. 1 and generally indicated at 10. In Fig. 1, fuel processing systems 10 are schematically illustrated together with an optional fuel cell stack 42, which may be used to power an energy-consuming device, as discussed herein. Fuel processing systems 10 include a hydrogen-producing fuel processing assembly, or hydrogen-producing assembly, 12 and are adapted to produce a product hydrogen stream 14 containing hydrogen gas as a majority component, and in many embodiments at least substantially pure hydrogen gas, from one or more feed streams 16. Feed stream 16 may be drawn or otherwise received from one or more sources, or supplies, 112 by feedstock delivery system 22 and thereafter delivered to hydrogen-producing assembly 12. It is thus within the scope of the present disclosure that the one or more sources, or supplies, may be a portion of the feedstock delivery system or may be external sources or supplies with which the feedstock delivery system is in fluid communication to receive the feed stream(s), or components thereof, from the one or more sources or supplies.

Although much of the following discussion of feed streams will refer to liquid feed streams, or at least feed streams that are liquid at ambient conditions, it is within the scope of the present disclosure that feed stream 16 may be a liquid feed stream when drawn or otherwise received from a suitable source, a gaseous feed stream, or a feed stream that includes liquid and gaseous components.

Feed stream 16 includes at least one carbon-containing feedstock 18 and may include water 17. Illustrative, non-exclusive examples of suitable liquid carbon-containing feedstocks 18 include at least one hydrocarbon or alcohol that is liquid at ambient conditions, such as 25° C and 1 atm. Illustrative, non-exclusive examples of suitable liquid hydrocarbons include diesel, kerosene, gasoline, synthetic liquid fuels, and the like. Additional illustrative examples of suitable liquid hydrocarbons include oxygenated hydrocarbons, such as acetone, acetic acid, formate, and dimethyl carbonate. Illustrative, non-exclusive examples of gaseous hydrocarbons include methane, butane, propane, and natural gas. Illustrative, non-exclusive examples of suitable alcohols include methanol, ethanol, and polyols, such as ethylene glycol and propylene glycol. While a single feed stream 16 is shown in Fig. 1, it is within the scope of the disclosure that more than one stream 16 may be used and that these streams may contain the same or different feedstocks. When feed stream 16 contains two or more components, such as a carbon-containing feedstock and water, the components may be delivered in the same or different feed streams.

According to an aspect of the present disclosure, feedstock delivery system 22 may be adapted to draw or otherwise receive at least a liquid carbon-containing feedstock from a supply, or source, 112 and to deliver a feed stream 16 containing at least the carbon-containing feedstock for use in at least the hydrogen-producing region of the fuel processing system's hydrogen-producing assembly 12. Supply 112 may include any suitable type and/or number of reservoirs and/or other sources from which one or more feedstocks for the feed stream may be drawn or otherwise received. Illustrative, non-exclusive examples of suitable supplies 112 include tanks, canisters, and other fluid vessels, which may be pressurized or unpressurized. Feedstock delivery system 22 may utilize any suitable delivery mechanism, such as a positive displacement or other suitable pump or mechanism for propelling and pressurizing the feed streams. When one or more pumps are used, the number, type and capacity of the pumps may vary, such as with respect to the desired flow rate of liquid to be pumped thereby, the desired pressure to be provided to the liquid, the composition of the liquid, whether or not the flow rate is intended to be selectively varied, etc.

When the fuel processing assembly is configured to receive water and a carbon-containing feedstock as reactants to produce hydrogen gas and when the carbon-containing feedstock is miscible with water, the carbon-containing feedstock may be, but is not required to be, delivered to the fuel processing assembly in the same feed stream as the water component of feed stream 16, such as shown in Fig. 1 by reference numerals 17 and 18 pointing to the same feed stream 16. For example, when the fuel processing assembly receives a feed stream containing water and a water-soluble alcohol, such as methanol, these components may be premixed and delivered as a single feed stream. As an illustrative, non-exclusive example, a reforming feed stream may contain approximately 25-75 vol% methanol or ethanol or another suitable water-miscible carbon-containing feedstock, and approximately 25-75 vol% water. For feed streams formed (at least substantially) of methanol and water, the streams will typically contain approximately 50-75 vol% methanol and approximately 25-50 vol% water. Feed streams 16 containing ethanol or other water-miscible alcohols will typically contain approximately 25-60 vol% alcohol and approximately 40-75 vol% water. For hydrogen-generating assemblies that utilize steam reforming or autothermal reforming reactions to produce hydrogen gas, an illustrative, non-exclusive example of a particularly well-suited feed stream contains 69 vol% methanol and 31 vol% water, although other compositions and liquid carbon-containing feedstocks may be used without departing from the scope of the present disclosure. It is within the scope of the present disclosure that such a feed stream that contains both water and at least one carbon-containing feedstock may be used as the feed stream for hydrogen-producing region 19 and as a combustible fuel stream for a burner or other heating assembly (when present) that is adapted to heat at least the hydrogen-producing region of the fuel processing system, such as to a suitable hydrogen-producing temperature.

Hydrogen-producing assembly 12 includes a hydrogen-producing region 19, in which an output, or reaction product, stream 20 containing hydrogen gas is produced by utilizing any suitable hydrogen-producing mechanism(s) to chemically react the feedstock(s) from the feed stream(s). Output stream 20 includes hydrogen gas as at least a majority component and may additionally or alternatively be referred to as a reformate stream, or reformate gas stream, 20. Output stream 20 may include one or more additional gaseous components, and thereby may be referred to as a mixed gas stream, which contains hydrogen gas as its majority component, and which also contains other gases. The other gases that are typically present in the reformate stream include carbon monoxide, carbon dioxide, methane, steam, and/or unreacted carbon-containing feedstock.

An illustrative, non-exclusive example of a suitable mechanism for producing hydrogen gas in hydrogen-producing region 19 from feed stream(s) 16 delivered by feedstock delivery system 22 is steam reforming, in which a reforming catalyst is used to produce hydrogen gas from at least one feed stream 16 containing a carbon-containing feedstock 18 and water 17. In a steam reforming process, hydrogen-producing region 19 contains a suitable steam reforming catalyst 23, as indicated in dashed lines in Fig. 1. In such an embodiment, in which a steam reforming catalyst is utilized, the fuel processing assembly may be referred to as a steam reformer, hydrogen-producing region 19 may be referred to as a reforming region, and output, or mixed gas, stream 20 may be referred to as a reformate gas stream. As used herein, reforming region 19 refers to any hydrogen-producing region utilizing a hydrogen-producing mechanism, or reaction.

The selection of steam reforming catalyst may affect the operation conditions of the hydrogen-producing region, as well as the temperature of the hydrogen-producing assembly. Any suitable type of catalyst may be applied to the reforming reactions, including such illustrative, non-exclusive examples as monolith, pellets, extrudates, spheres, meshes, fibers, mat, and (wall) wash coats. Illustrative, non-exclusive examples of suitable steam reforming catalysts are disclosed in U.S. Patent No. 7,128,769.

Another illustrative example of a suitable hydrogen-producing reaction that may be utilized in hydrogen-producing region 19 is autothermal reforming, in which a suitable autothermal reforming catalyst is used to produce hydrogen gas from water and a carbon-containing feedstock in the presence of air. When autothermal reforming is used, the fuel processing assembly further includes an air delivery assembly 67 that is adapted to deliver an air stream to the hydrogen-producing region, as indicated in dashed lines in Fig. 1. Autothermal hydrogen-producing reactions utilize a primary endothermic reaction that is utilized in conjunction with an exothermic partial oxidation reaction, which generates heat within the hydrogen-producing region upon initiation of the initial hydrogen-producing reaction.

It is within the scope of the present disclosure for the hydrogen-producing region 19 to include two or more zones, or portions, each of which may be operated at the same or at different temperatures. For example, when the carbon-containing feedstock is, or includes, a hydrocarbon, in some embodiments it may be desirable to include two different hydrogen-producing portions, with one operating at a lower temperature than the other to provide a pre-reforming region. In such an embodiment, the fuel processing system alternatively may be described as including two or more hydrogen-producing regions. The mechanisms utilized by these hydrogen-producing regions to produce hydrogen gas may or may not be the same. For example, a hydrogen-producing region that utilizes an autothermal reaction to produce hydrogen gas may be followed by a hydrogen-producing region that utilizes a steam reforming reaction to produce hydrogen gas.

At least the hydrogen-producing region 19 of hydrogen-producing assembly 12 is designed to be operated at an elevated temperature when being utilized to produce hydrogen gas. This hydrogen-producing temperature may be achieved and/or maintained in hydrogen-producing region 19 through the use of a heating assembly 60 or other suitable heat source. Hydrogen-producing steam reformers typically operate at temperatures in the range of 200-900° C. Temperatures outside of this range are within the scope of the disclosure. When the carbon-containing feedstock is methanol, the steam reforming reaction will typically operate in a temperature range of approximately 200-500° C. Illustrative subsets of this range include 200-300° C, 200-400° C, 250-350° C, 300-400° C, 350-450° C, 375-425° C, 375-400° C, and 400-450° C. When the carbon-containing feedstock is a hydrocarbon, ethanol, or another alcohol, a temperature range of approximately 400-900° C will typically be used for the steam reforming reaction. Illustrative subsets of this range include 750-850° C, 725-825° C, 650-750° C, 700-800° C, 700-900° C, 500-800° C, 400-600° C, and 600-800° C.

At least the hydrogen-producing region 19 of hydrogen-producing assembly 12 also may be configured to be operated at an elevated pressure, such as a pressure of at least 30, at least 40, or at least 50 psi. This pressure may be referred to herein as a hydrogen-producing pressure. As illustrative, non-exclusive examples, steam and autothermal reformers are typically operated at such hydrogen-producing pressures as pressures in the range of 40-1000 psi, including pressures in the range of 40-100 psi, 50-150 psi, 50-200 psi, etc. Pressures outside of this range may be used and are within the scope of the present disclosure. For example, in some embodiments, a lower pressure may be sufficient, such as when the hydrogen-producing region is adapted to produce hydrogen gas using a partial oxidation and/or autothermal reforming reaction and/or when the fuel processing system does not utilize a pressure-driven separation process to increase the purity of the hydrogen gas produced in the hydrogen-producing region. When the fuel processing system includes a purification, or separation, region, such as described herein, this region also may be designed to operate at an elevated pressure and/or elevated temperature. In some fuel processing assemblies according to the present disclosure, the hydrogen-producing region and/or any associated separation region may be designed to be operated at a comparatively low pressure, such as a pressure that is less than 70 psi, less than 60 psi, less than 50 psi, in the range of 30-50 psi, 30-70 psi, 40-60 psi, etc.

The particular maximum and minimum operating pressures for a particular fuel processing system may vary according to a variety of possible factors. Illustrative, non-exclusive examples of such factors may include, but are not limited to, the hydrogen-producing reaction and/or catalyst utilized in hydrogen-producing region 19, the composition of feed stream 16, the viscosity of the liquid in feed stream 16, the construction of the fuel processing assembly, the pressure and/or temperature requirements of the fuel processing assembly and/or a separation region and/or a fuel cell system downstream from the hydrogen-producing region, the materials of construction of the fuel processing assembly, design choices and tolerances, etc. For example, some fuel processing systems may be designed to maintain an elevated pressure in at least the hydrogen-producing region, and optionally at least one purification region thereof, by utilizing a restrictive orifice or other suitable flow restrictor downstream of the hydrogen-producing region, and optionally downstream of a purification region if it is also desirable to maintain the purification region at an elevated pressure. In some embodiments, the feedstock delivery system provides a feed stream having a pressure sufficient to result in the hydrogen-producing region being pressurized to at least a minimum hydrogen-producing pressure.

The heat required to heat (and/or maintain) at least the hydrogen-producing region 19 of hydrogen-producing assembly 12 to (and/or at) at a suitable hydrogen-producing temperature (such as those discussed above), may be provided by a heating assembly, which may form a portion of hydrogen-producing assembly 12. Illustrative, non-exclusive examples of suitable structures for heating assembly 60 include a burner or other combustion-based heater 62 that combusts at least one fuel stream 64 and air to produce heat, and which may accordingly produce at least one heated exhaust stream, or combustion exhaust stream, 66. Fuel stream 64 and air may collectively be referred to as a fuel-air stream 64. As used herein, "fuel-air stream," "fuel and air mixture," and the like refer to a stream of oxygenated fuel and is not limited to including air, per se. The heat exchange between the components of the fuel processing assembly may be enabled via a variety of direct and indirect heating mechanisms. Illustrative, non-exclusive examples of heating assemblies and components thereof that may be used with fuel processing systems according to the present disclosure are disclosed in U.S. Patent Application Publication Nos. 2003/0192251, 2003/0223926, and 2006/0272212. As discussed in more detail herein, it is within the scope of the present disclosure that this heat may be transmitted to at least the components of the hydrogen-producing assembly 12 via any suitable mechanism, including convection, conduction, and/or radiation.

It is also within the scope of the present disclosure that other configurations and types of heating assemblies 60 may be additionally or alternatively utilized. As an illustrative example, a heating assembly 60 may be an electrically powered heating assembly that is adapted to heat at least the hydrogen-producing region of the hydrogen-producing assembly (and optionally a vaporization region 69, when present) by generating heat using at least one heating element, such as a resistive heating element. Therefore, it is not required that heating assembly 60 receive and combust a combustible fuel stream to heat hydrogen-producing region 19 to a suitable hydrogen-producing temperature.

When one or more of the feedstocks is received from the feedstock delivery system as a liquid stream, such as via one or more pumps associated with the feedstock delivery system, the fuel processing assembly may include a vaporization region 69 in which a liquid portion of the feed stream is converted into a gaseous stream. The heat required for this vaporization may be provided by the heat produced by heating assembly 60. It is also within the scope of the disclosure that hydrogen-producing assembly 12 may be constructed without a vaporization region and/or that the hydrogen-producing assembly is adapted to receive at least one feedstock that is gaseous or that has already been vaporized.

In conventional fuel processing assemblies, the components are spaced-apart from each other and separated by open space, such as an internal compartment or chamber within a common housing in which the components are enclosed. These components are interconnected by tubing and associated fittings to establish fluid conduits between the physically separated components. A conventional fuel processing assembly will often also include one or more heat exchangers to enable and regulate heat transfer between various fluid streams within the fuel processing assembly and/or fuel processing system.

In contrast to such conventional fuel processing assemblies, hydrogen-producing assemblies 12 according to the present disclosure include a solid heat transfer mass, or body, 140 that physically interconnects, extends between, and surrounds components of the hydrogen-producing assembly. Heat transfer body 140 may additionally or alternatively be referred to as a heat transfer block with internal passages and cavities that contain components and interconnecting fluid conduits of the hydrogen-producing assembly. As schematically illustrated in Fig. 1, at least the hydrogen-producing region 19, vaporization region 69, and heating assembly 60 of the hydrogen-producing assembly may be contained within the heat transfer body 140. Heat transfer body 140 may additionally or alternatively be referred to as, and/or may include, a monolithic body 143. Additionally or alternatively, a heat transfer body 140 may include, and a monolithic body 143 may be coupled to, one or more end caps 141, as schematically illustrated in Fig. 1. The number, size, thickness, and position of the one or more end caps that may be used with a heat conductive body and/or monolithic body may vary without departing from the scope of the present disclosure.

End caps 141, when present, may include fluid passages that fluidly interconnect two or more fluid conduits that extend through the monolithic body and/or heat transfer body. Such end caps may be referred to herein as end cap manifolds 141. When present, an end cap manifold may include or define fluid passages to and from one or more of the hydrogen-producing region 19 and the optional vaporization region 69, and/or portions thereof. For example, as schematically illustrated in Fig. 1 at 75, a fluid passage may connect the hydrogen-producing region 19 to itself via an end cap manifold 141. For example, a hydrogen-producing region 19 may include more than one portion defined within the monolithic body 140 that are fluidly connected to each other via one or more end cap manifolds. Similarly, as schematically illustrated at 77, a fluid passage may connect the optional vaporization region to itself via an end cap manifold 141, and therefore an optional vaporization region may include more than one portion defined within the monolithic body 140 that are fluidly connected to each other via one or more end cap manifolds. Additionally or alternatively, as schematically illustrated at 79, the hydrogen-producing region 19 may be fluidly coupled to the optional vaporization region 69 via a passage extending through an end cap manifold. Other configurations are also within the scope of the present disclosure. End caps, and/or end cap manifolds, 141 additionally or alternatively may include fluid ports that extend through the end caps, such as to provide a fluid connection with conduits through which fluids are delivered to, or removed from, the monolithic body and/or heat transfer body.

As mentioned, hydrogen-producing assemblies 12 according to the present disclosure may additionally include electrically powered heating assemblies, such as electric resistance heaters 63. For example, and as schematically illustrated in Fig. 1, a hydrogen-producing assembly may include one or more electric resistance heaters 63 disposed within one or more heater conduits 65 defined by the monolithic body 143. In such embodiments, an electric resistance heater may be described as a cartridge heater 71 because it is configured to extend into or within a heater conduit 65. Although schematically illustrated in Fig. 1 as including two optional cartridge heaters 71 disposed within the monolithic body, it is within the scope of the present disclosure that no, one, or more than two cartridge heaters may be used. In Fig. 1, a first cartridge heater 71 is schematically illustrated adjacent the hydrogen-producing region 19 schematically illustrating that such a heater may be used to at least temporarily heat the hydrogen-producing region, for example, to within a suitable reforming (or hydrogen-producing) temperature range, such as a suitable steam reforming temperature range. A second cartridge heater 71 is schematically illustrated adjacent the optional vaporization region 69 to schematically illustrate that such a heater may be used to at least temporarily heat the vaporization region, for example, to at least a suitable vaporization temperature, namely, a suitable temperature for vaporizing the fed stream, or any liquid component thereof. In embodiments that include an electric resistance heater, the hydrogen-producing assembly and/or fuel processing system may be configured to deactivate the electric resistance heater in response to the burner generating sufficient heat to maintain the hydrogen-producing region within a reforming temperature range. Additionally or alternatively, the hydrogen-producing assembly and/or fuel processing system may be configured to turn off, or otherwise deactivate the electric resistance heater after a predetermined period of time. As discussed herein, the use of an electric resistance heater may be utilized to efficiently startup a hydrogen-producing assembly according to the present disclosure, for example, in response to a primary power source becoming unavailable to power an energy-consuming device, such as when the hydrogen-producing assembly is a component of a fuel cell system.

As also schematically illustrated in Fig. 1, hydrogen-producing assemblies 12 according to the present disclosure may additionally or alternatively (but are not required to) include an electric resistance heater 63 that generally surrounds at least a portion of the heat transfer body 140, including monolithic body 143. In such embodiments, an electric resistance heater may be described as a wrap, or band, heater 73 because it at least partially, or even completely, encircles the heat transfer body and/or the monolithic body.

In Fig. 2, illustrative, non-exclusive examples of hydrogen-producing assemblies 12 with heat transfer body 140 are schematically illustrated. As shown, heat transfer body 140 may include internal fluid passages 142 that interconnect cavities, chambers, or conduits, 144 that form, surround, and/or define optional vaporization region 69, hydrogen-producing region 19, and burner 62 of the fuel processing assembly. As shown, burner 62 may be in fluid communication with at least one fluid passage 142 through which air and fuel may be delivered to the burner, and at least one fluid passage through which combustion exhaust 66 may exit body 140. As indicated in dashed lines, the fluid passage(s) through heat transfer body 140 through which the combustion exhaust flows may pass to, around, through, or otherwise proximate the cavities that define the optional vaporization region and the hydrogen-producing region. Also shown in Fig. 2 are at least one fluid passage through which the feed stream(s) may be delivered to the vaporization region (when present) and then the hydrogen-producing region, and at least one fluid passage through which the output stream 20 may flow out of the heat transfer body from the hydrogen-producing region. It is within the scope of the present disclosure that heat transfer body 140 may be free from fittings and/or fluid conduits that interconnect the components of the fuel processing assembly external the heat transfer body 140, although this is not required to all embodiments.

Although schematically illustrated in Fig. 2, the functional regions, or zones, of the hydrogen-producing assembly may each include one or more fluid passages or cavities within the body. The directions of the cavities and fluid passages within the body may vary, such as being co-current, counter-current, and/or cross-current in relation to each other. The fluid paths may have any suitable shape and size, including linear, arcuate, and/or coiled configurations. The length and cross sectional area of the cavities and fluid passages may vary within the scope of the present disclosure. As an illustrative, non-exclusive example, these cross-sectional areas may range from 0.19 to 8,000 square millimeters to accommodate reactions in different flow scales. It is within the scope of the present disclosure that the body may include additional structures for enhancing mixing and heat transfer, such as passive mixers (such as baffles, pallets, fins, microtubes, etc.). Illustrative, non-exclusive examples of mixing structures are disclosed in U.S. Patent Application Serial No. 12/182,959.

Heat transfer body 140 may be a monolithic structure and/or as mentioned may at least include a monolithic body 143. In such an embodiment, the heat transfer body 40, and/or the monolithic body 143 may formed without seams, welds, or other seals or interfaces between two or more interconnected and separately formed portions of the heat transfer body and/or monolithic body. These bodies may themselves be interconnected with one or more additional components of the fuel processing assembly, such as end caps, but the bodies are formed as one-piece structures. Alternatively, heat transfer body 140 may be a solid structure that is formed from two or more components that are secured together by any suitable permanent or releasable fastening mechanism. Illustrative, non-exclusive examples of permanent fastening mechanisms include welding, brazing, and diffusion bonding. Illustrative, non-exclusive examples of releasable fastening mechanisms include the use of releasable fasteners, screws, bands, bolts, joints, tie-rods, and the like that are designed to be repeatedly coupled together, uncoupled, and then recoupled together without destruction of at least the components of the body. When formed from two or more components, these components may have the same or different shapes, sizes, and/or materials of construction.

To facilitate heat transfer from burner 62 (or other heating assembly 60, such as optional electric resistance heaters) to the hydrogen-producing region 19 and optional vaporization region through the material from which heat transfer body 140 and/or monolithic body 143 is formed, heat transfer body 140 and/or monolithic body 143 should be formed from one or more materials having high heat conductivity. Illustrative, non-exclusive examples of such materials include aluminum and its alloys, copper and its alloys, silicon, carbon and its carbide compounds, nitride compounds, and other transition metals in the Periodic Table of the Elements and their alloys. As an illustrative, non-exclusive example, aluminum and its alloys have thermal conductivities that are at least an order of magnitude greater than that of (most) steel alloys. This may correlate to requiring one tenth of the corresponding surface area to achieve the same heat transfer rate as a similar structure formed from a conventional steel alloy. As illustrative, non-exclusive examples, the thermal conductivity of the heat transfer body and/or the monolithic body may be one of at least 50%, at least 100%, at least 200%, at least 400%, at least 800%, and at least 1,600% greater than the thermal conductivity of steel, or a conventional steel alloy.

Due to its thermal conductivity and position surrounding and interconnecting the components of the fuel processing assembly, heat transfer body 140 and/or monolithic body 143 also may be described as being, forming, and/or functioning as, a heat exchanger between the components and fluid streams of the hydrogen-producing assembly. Heat transfer may be affected through the material of the heat transfer body and/or the monolithic body via conduction and/or radiation, as well as via flow of the various fluid streams through the body, and thus via convection. In some embodiments, heat transfer body 140 and/or monolithic body 143 may provide at least a hydrogen-producing region that is maintained at or near isothermal conditions during use of the fuel processing assembly after the fuel processing assembly has been properly started up and heated to a suitable hydrogen-producing temperature. The conductive heat exchange relationship of the functional components, or regions, defined within the heat transfer body 140 and/or monolithic body 143 may reduce thermal gradients within the hydrogen-producing region and/or may otherwise provide for efficient heat transfer between these components, or regions, that are formed with the cavities, voids, or other regions formed within the heat transfer body and/or monolithic body itself.

When choosing the one or more conductive materials from which heat transfer body 140 and/or monolithic body 143 will be formed, consideration should be given to the melting points and oxidation stability of the materials, as well as the expected mechanical stress as the function of reaction temperature, pressure and designed operation time. As discussed, the operating (i.e., hydrogen-producing) temperature of hydrogen-producing region 19 is at least partially dictated by the feedstock from which hydrogen gas is to be produced. One or more of the cavities that define and/or receive the functional regions of the fuel processing assembly (vaporization region, hydrogen-producing region, burner, etc.) and/or one or more of the corresponding fluid passages may include an oxidation resistant coating and/or layer. An illustrative, non-exclusive example of a suitable oxidation resistant coating is an aluminum oxide layer, such as may be applied through an anodizing process. To increase heat transfer within the cavities and/or fluid passages, these portions of the fuel processing assembly may include passive mixing elements therewithin, such as metal shots, meshes, vanes, fins, and the like.

Heat transfer body 140 and/or monolithic body 143 may be formed from any suitable process, with illustrative, non-exclusive examples including extrusion, casting, brazing, welding, stamping, CNC machining, sintering, and automated welding. As an illustrative, non-exclusive example, aluminum is a soft metal with which relative low cost fabrication techniques, such as extrusion and brazing, may be readily utilized. These processes, as well as the corresponding materials of construction, may reduce the number of individual pieces, assembly time, complexity, and/or manufacturing cost of the fuel processing assembly compared to a conventional fuel processing assembly. Once formed, the hydrogen-producing assembly 12 may not need additional handling during integration with the rest of a fuel processing assembly 10 or a corresponding fuel cell system, as is the case with traditional discrete devices.

When hydrogen-producing assembly 12 includes a heating assembly 60 in the form of a burner 62, the burner may be a catalytic burner, a non-catalytic burner, or a combination of the two. The burner temperature should be controlled, such as by regulating the air and/or fuel flow to the burner and/or the distribution of air and fuel. An oxidation resistant coating, or sleeve, may be applied to the inner wall of the burner to enhance durability of heat transfer body 140 and/or monolithic body 143. Illustrative, non-exclusive examples of suitable burner types include a cool flame burner assisted by a nozzle, a flameless distributed burner, a porous media burner, a metal fiber mesh burner, and/or a catalytic burner with combustion catalyst coated on the burner's internal wall. For liquid hydrocarbon reforming, or otherwise when higher temperatures are desired and/or when byproduct stream 28 does not have sufficient fuel value to provide sufficient heat, it may be necessary to introduce liquid fuel directly into the burner during the startup as well as during operation. However, this is not required to all burners within the scope of the present disclosure.

Hydrogen-producing assemblies 12 according to the present disclosure may include a heating assembly 60 in the form of a burner 62, as discussed, and may additionally include an electrical heater, such as a heater with an electric heating element in the form of a heat cartridge, band heater, surface heater, etc., and any combinations the above. For example, this additional heater, which in some embodiments may be referred to as a startup heater, may be utilized during initial heating of the fuel processing assembly, such as during startup, and thereafter turned off after the fuel processing assembly reaches a desired temperature, such as a suitable hydrogen-producing temperature. In some embodiments, the fuel processing assembly may utilize only a single heating assembly during startup and normal (hydrogen-producing) operation.

For a fuel processing assembly utilizing methanol and water as feedstocks, an illustrative, non-exclusive method for starting up the fuel processing system is to utilize electric heating (e.g., with a band heater or other suitable resistive heater) and a catalytic combustion catalyst section within the burner chamber. That is, in some embodiments, a hydrogen-producing assembly may include a combustion catalyst 202 disposed within the burner to define an ignition zone 208. When the device reaches a suitable operating (or hydrogen-producing) temperature for the methanol reforming catalyst and above the light-off temperature of the combustible components of the burner fuel, methanol/water may be delivered to the burner. Once the burner fuel and air reaches the combustion catalyst 202, the burner lights off automatically, assuming a suitable light-off temperature and pressure of the fuel and air and/or a suitable light-off temperature of the combustion catalyst. In addition, as long as the combustion catalyst remains above the light-off temperature of the burner fuel, no other ignition-proving mechanism may be needed, such as according to Sections 1.10 and 1.11 of ANSI/CSA America FC 1-2004).

Another factor to consider in connection with the burner is the placement of the combustion catalyst. Typical flame temperatures of at least 800° C and less than 1600° C may be achieved in a porous, catalytic, or open burner. Conventional platinum and palladium or palladium oxide combustion catalysts with a promoter, such as cerium oxide and lanthanum oxide, are catalytically active above room temperature for platinum, and above approximately 250° C for palladium and palladium oxide, with these temperatures being referred to as the corresponding light-off temperatures for a hydrogen-rich reformate fuel in the presence of these catalysts. Conventional combustion catalysts typically are unstable above 900-1000° C and thus need to be protected thermally and/or protected by staged air or staged fuel introduction with heat exchange between each stage to avoid overheating the combustion catalyst.

As schematically indicated in Figs. 1 and 2 at 204, it is within the scope of the present disclosure that a burner, when present in the heat transfer body 140 and/or monolithic body 143, may include a selection of a suitable fuel-air mixing structure that is positioned within a burner chamber, or conduit, of the burner. Such a fuel-air mixing structure may permit ignition of the fuel and air mixture within the ignition zone and allow the combustion thereof to propagate back toward the inlet where air and fuel are first introduced into the burner and subsequently mixed by the fuel-air mixing structure. In this manner, the combustion may be transient within the burner and the combustion may propagate to a combustion region 206 of the burner, which may (but is not required to) be back toward the inlet of the burner. The combustion is then supported within the combustion region by the fuel-air mixing structure. As used herein, the "combustion region" of a burner refers to a region within the burner in which combustion is maintained during steady state, and may (but is not required to) coincide with at least a portion of the fuel-air mixing structure, when present. That is, while ignition of the fuel and air mixture may occur in an ignition zone separate from the combustion region and combustion may propagate from the ignition zone to the combustion region, the combustion region defines the portion of the burner in which combustion is maintained after initial ignition of the fuel and air mixture. In some embodiments, the combustion region fills the entire burner chamber, or conduit, while in other embodiments, the combustion region is a subregion of the burner chamber, or conduit. In some embodiments, the combustion region is generally adjacent the inlet to the burner chamber, or conduit. In some embodiments, the combustion region extends for less than one half of the length of the burner conduit. Other configurations are also within the scope of the present disclosure. In some embodiments, the fuel-air mixing structure may be configured to support flameless combustion in the combustion region.

While combustion is maintained in the combustion region of the burner, and in some embodiments supported by a fuel-air mixing structure, heat is conducted through the heat transfer body and/or the monolithic body to the hydrogen-producing region and/or optional vaporization region of the hydrogen-producing assembly. Accordingly, the exhaust gases are cooled as they travel through the burner. Proper fuel and air management may maintain the exhaust gas temperature below a damage threshold of the combustion catalyst, for example, when the combustion catalyst is disposed at or adjacent the exit, or outlet, of the burner. Further optimization of the burner may permit efficient heat transfer from the combustion gases to the hydrogen-producing region and the optional vaporization region with the exit temperature of the gases just above the target equilibrium reforming temperature, an illustrative, non-exclusive example of which is 250-315 °C for a high thermal efficiency system.

Illustrative, non-exclusive examples of suitable fuel-air mixing structure that may be incorporated into a burner include (but are not limited to) one or more of porous foams, monolithic blocks, packed pellets, balls, pall rings, saddle rings, cross-partition rings, Raschig rings, Intalox saddles, cascade rings, Berl saddles, structured packing, screens or bundles of fine tubing or fiber, any of which may be made of metal and/or ceramic materials that are structurally stable at desired operating temperatures. In some embodiments, the fuel-air mixing structure may extend between the combustion catalyst and the combustion region. Additionally or alternatively, the fuel-air mixing structure may extend between the combustion catalyst and the burner inlet. Additionally or alternatively, the fuel-air mixing structure may extend from adjacent the burner, or exhaust, outlet to adjacent the burner, or fuel-air, inlet. Additionally or alternatively, the fuel-air mixing structure may extend adjacent the burner outlet and adjacent the burner inlet. Additionally or alternatively, the fuel-air mixing structure may be disposed in two or more spaced-apart regions of the burner. Additionally or alternatively, the fuel-air mixing structure may be disposed only in the combustion region of the burner.

In some embodiments, the combustion catalyst is disposed on a portion of the fuel-air mixing structure, when present, adjacent the burner, or exhaust, outlet. Additionally or alternatively, the combustion catalyst may be disposed only on a portion of the fuel-air mixing structure adjacent the burner, or exhaust, outlet. In some such embodiments, the portion of the fuel-air mixing structure on which the combustion catalyst is disposed may extend for less than one eighth or for less than one fourth of the length of the burner, the burner conduit, the burner chamber, the monolithic body, and/or the heat transfer body. Additionally or alternatively, the combustion catalyst may be disposed in spaced-apart regions of the burner. Additionally or alternatively, the combustion catalyst may be disposed on a wall of the burner chamber, or conduit, and not be disposed on the fuel-air mixing structure, even when present. Additionally or alternatively, the combustion catalyst may be disposed both on a wall of the burner chamber, or conduit, as well as on the fuel-air mixing structure. The distribution and positioning of the combustion catalyst may vary according to such factors as the combustion catalyst itself, the reforming temperatures being utilized, the thermal conductivity of the heat transfer body/combustion catalyst interface, and the desired heat flux. In some embodiments, the combustion catalyst may be positioned along the entire length of the burner, burner chamber, or burner conduit.

When utilizing a porous media as a fuel-air mixing structure, selection of too small a pore size may prevent the combustion from traveling toward the desired combustion region, thereby permitting undesirable long-term combustion of the mixture in the ignition zone. The result of a small pore configuration is thus likely to include one or more of poor thermal integration and heat transfer, excess thermal losses in the combustion exhaust, poor emissions due to incomplete combustion and residence time, and limited life of the combustion catalyst due to high temperatures without adequate heat transfer in the combustion catalyst zone.

As shown in Fig. 3, hydrogen-producing assembly 12 may further include a containment vessel, or housing, 150 into which heat transfer body 140 is positioned. Containment vessel 150 may additionally or alternatively be referred to as an outer housing. Vessel 150 may be formed from metallic and/or non-metallic materials and may define a gas-tight enclosure that includes one or more defined inlets and outlets 152 for fluids to enter and be removed from the vessel. For example, the vessel may include an exhaust port 154 through which at least combustion exhaust and/or any leaked gases may be removed from the vessel. The vessel may include insulation 156 within the vessel's walls and/or between the internal wall of the vessel and the exterior of the body. Vessel 150 may be pressurized or unpressurized. When pressurized, it may be pressurized to provide support to the body, such as by being pressurized to a pressure in the range of 0.01 to 2, 3, 5, or 10 times the pressure of the hydrogen-producing region. It is within the scope of the present disclosure that other pressures, including pressures that are below, within, or above these illustrative ranges, may be utilized without departing from the scope of the present disclosure.

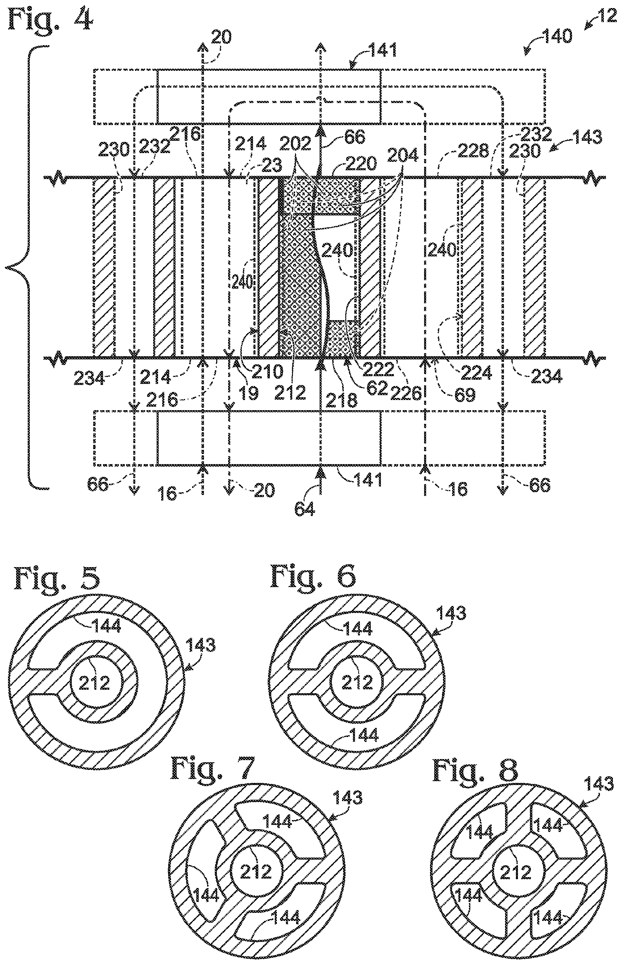

Fig. 4 somewhat less schematically illustrates illustrative, non-exclusive examples of hydrogen-producing assemblies 12 according to the present disclosure that include a heat transfer body 140 including a monolithic body 143 and two end cap manifolds 141. More specifically, Fig. 4 schematically illustrates a monolithic body 143 in cross-section together with the various regions defined therein, together with the two end cap manifolds and the fluid flow paths, or conduits, through the monolithic body and the end cap manifolds. As illustrated, the monolithic body 143 may define a reforming conduit 210 and a burner conduit 212, each extending longitudinally through the monolithic body. Reforming conduit 210 may be described as defining or including hydrogen-producing region 19 and burner conduit 212 may be described as defining or including burner 62 of hydrogen producing assembly 12.

Monolithic body 143 may further define a feed inlet 214 to the reforming conduit for receiving a feed stream 16 into the reforming conduit, and a reformate outlet 216 from the reforming conduit for delivering the reformate gas stream 20 downstream of the hydrogen-producing region, with the associated flow illustrated in dashed lines in Fig. 4. Monolithic body 143 may further define a fuel-air inlet 218 to the burner conduit for receiving a fuel-air stream 64 into the burner conduit, and an exhaust outlet 220 from the burner conduit for delivering exhaust stream 66 from the burner conduit.

A reforming catalyst 23 is disposed within the reforming conduit and is configured to catalyze production of reformate gas stream 20 from feed stream 16 via an endothermic reaction within a reforming temperature range, wherein the reforming conduit 210 is spaced radially from the burner conduit 212. In Fig. 4, a fuel-air mixing structure 204 is shown disposed within the burner conduit and configured to support combustion of the fuel-air stream in a combustion region of the burner conduit, generally adjacent fuel-air inlet 218. As discussed herein and as schematically illustrated in Fig. 4, fuel-air mixing structure 204 may be disposed in various configurations within the burner conduit. For example, as illustrated in solid lines in the left optionally illustrated portion of the burner conduit, the fuel-air mixing structure may extend for a majority of the length of the burner conduit. Additionally or alternatively, as illustrated in solid lines in the right optionally illustrated portion of the burner conduit, the fuel-air mixing structure may extend only adjacent the exhaust outlet. Additionally or alternatively, as illustrated in dashed lines in the left optionally illustrated portion of the burner conduit, together with the solid lines, the fuel-air mixing structure may extend the entire length of the burner conduit, or from the fuel-air inlet to the exhaust outlet. Additionally or alternatively, as illustrated in dashed lines in the right optionally illustrated portion of the burner conduit, the fuel-air mixing structure may extend generally adjacent the fuel-air inlet. Other configurations are also within the scope of the present disclosure, and Fig. 4 is intended to schematically illustrate illustrative, non-exclusive, and non-exhaustive, examples of configurations of fuel-air mixing structures that may be disposed within a burner conduit of a monolithic body according to the present disclosure.

Beyond the air-fuel mixing zone, the burner chamber may include one or more passive mixing elements to enhance the convective heat transport from combustion exhaust to the endothermic region of the reforming region and/or vaporizing region. Illustrative, non-exclusive examples of suitable passive mixing elements include bluff bodies, turbulators, vanes, fans, blocks, and the like. When present, the mixing elements may be formed from oxidative resistant materials or materials with oxidative resistant coatings.

In the illustrative, non-exclusive example shown in Fig. 4, combustion catalyst 202 is disposed within the burner conduit 212 only adjacent to the exhaust outlet and is configured to catalyze ignition of fuel-air stream 64 via an exothermic reaction.

Accordingly, monolithic body 143 may be constructed to conduct heat generated by the exothermic reaction of the combustion of the fuel-air stream in a combustion region of the burner conduit from the burner conduit to the reforming conduit to maintain the reforming catalyst within the reforming temperature range.

In some embodiments, as illustrated with solid lines in Fig. 4, a heat transfer body 140, and/or a monolithic body thereof, may include a reformer conduit and a burner conduit, with delivery of fuel-air stream 64 to the burner conduit and delivery of feed stream 16 to the reformer conduit via a first end cap manifold 141. The flow of the fuel-air stream and the feed stream may therefore be co-current, and the respective reformate gas stream and exhaust stream may exit the heat transfer body via a second end cap manifold 141. Additionally or alternatively, a similarly configured heat transfer body may utilize counter-current fluid flow, in which the fuel-air stream enters and the reformate gas stream exits the monolithic body via a first end cap manifold, and in which the exhaust stream exits and the feed stream enters the monolithic body via a second end cap manifold. Additionally or alternatively, one or both of the reformer conduit and the burner conduit may include more than one portion that extends the length of the monolithic body, with the respective portions being fluidly coupled via an end cap manifold.

As illustrated in dashed lines in Fig. 4, a heat transfer body 140 and/or a monolithic body 143 thereof may (but is not required to) further define a vaporizer conduit 224 that defines, or includes, a vaporization region 69, and which extends through the monolithic body adjacent the burner conduit. In such an embodiment, the monolithic body further defines a vaporizer inlet 226 to the vaporizer conduit for receiving feed stream 16 into the vaporizer conduit, and a vaporizer outlet 228 for delivering the feed stream to the reforming conduit via an end cap manifold. Accordingly, in such an embodiment, one of the fluid flow through the vaporizer conduit and the fluid flow through the reformer conduit may be co-current with the fluid flow through the burner conduit, while the other of the fluid flow through the vaporizer conduit and the fluid flow through the reforming conduit is counter-current to the fluid flow through the burner conduit. As an illustrative, non-exclusive example, the fluid flow through vaporizer conduit 224, co-current with the fluid flow through the burner through an end cap-manifold, and then through reformer conduit 210, counter-current to the fluid flow through the burner, is illustrated in dash-dot lines in Fig. 4. Additionally or alternatively, similar to the reformer conduit and the burner conduit discussed above, the vaporizer conduit may include more than one portion that extends the length of the monolithic body, with the respective portions being fluidly coupled via an end cap manifold.

As also illustrated in dashed lines in Fig. 4, a monolithic body 143 may (but is not required to) further define one or more exhaust conduits 230 that extend through the monolithic body adjacent one or both of the reformer conduit and the vaporizer conduit, when present. When present, the one or more exhaust conduits are in fluid communication with exhaust outlet 220 from the burner conduit. In such an embodiment, the monolithic body further defines a hot-exhaust inlet 232 to the exhaust conduit for receiving exhaust stream 66 from the burner conduit and via an end cap manifold, and a cooled-exhaust outlet 234 from the exhaust conduit for delivering the exhaust stream from the monolithic body, for example, via an end cap manifold. Accordingly, a monolithic body 143 according to the present disclosure may be constructed to conduct heat from the exhaust stream in the one or more exhaust conduits to the reforming conduit to maintain the reforming catalyst within the reforming temperature range and/or to the vaporizer conduit to vaporize liquid portions of feed stream 16.

The illustrative, non-exclusive examples of monolithic body 143 illustrated in Fig. 4 may be described as defining conduits that extend longitudinally through the monolithic body and/or that are parallel to each other. Additionally or alternatively, the reformer conduit and the optional vaporizer conduit may extend longitudinally through the monolithic body in a concentric pattern relative to the burner conduit. For example, the burner conduit may extend along a central longitudinal axis of the monolithic body with the reformer conduit, or portions thereof, and optionally the vaporizer conduit, or portions thereof, extending longitudinally through the monolithic body and radially spaced from the burner conduit. Other configurations are also within the scope of the present disclosure.

One or more of a burner conduit, a reformer conduit, and a vaporizer conduit may be lined, or coated, with any suitable material, for example to enhance the durability of the monolithic body. Additionally or alternatively, one or more of a hydrogen-producing region, a burner, and a vaporization region may be constructed as an insert that is positioned within the respective conduit of the monolithic body. None of these configurations are required of hydrogen-producing assemblies 12 according to the present disclosure, but they are collectively and schematically illustrated in Fig. 4 at 240 in dashed lines.

Figs. 5-8 schematically illustrate cross-sections of illustrative, non-exclusive examples of monolithic bodies 143 according to the present disclosure, each representation including a burner conduit 212 extending along a central longitudinal axis of the respective monolithic body. The conduits radially spaced from the burner conduit may be one or more of a reformer conduit, a portion of a reformer conduit, a vaporizer conduit, a portion of a vaporizer conduit, and a combined reformer and vaporizer conduit. Accordingly, in Figs. 5-8, the conduits are collectively indicated as conduits 144. The monolithic bodies of Figs. 5-8 respectively include one to four conduits 144 that are separate and distinct from the respective central burner conduit 212. Accordingly, as an illustrative, non-exclusive example with reference to Fig. 5, the illustrated monolithic body may define a single reformer conduit that is spaced radially from the central burner conduit. Such a configuration of a monolithic body may not include a vaporizer conduit, or alternatively, the illustrated conduit 144 of Fig. 5 may define a combined vaporizer and reformer conduit, in that a portion of the illustrated conduit includes a vaporization region and another portion of the conduit includes a hydrogen-producing region.

As another illustrative, non-exclusive example with reference to Fig. 6, the illustrated monolithic body may define a first reformer-conduit portion and a second reformer-conduit portion that are spaced radially from the central burner conduit. Alternatively, the illustrated monolithic body may define a vaporizer conduit and a reformer conduit. Additionally or alternatively, one of the illustrated conduits 144 may define a combined vaporizer and reformer conduit. Figs. 7 and 8 respectively illustrate monolithic bodies that define three and four conduits 144 radially spaced from the central burner conduit, with the conduits 144 defining one or more of a reformer conduit, a portion of a reformer conduit, a vaporizer conduit, a portion of a vaporizer conduit, and a combined vaporizer and reformer conduit. Other configurations are also within the scope of the present disclosure, and monolithic bodies 143 are not limited to including one to four conduits, or conduit portions, 144 in addition to a burner conduit. Moreover, and as discussed herein, end caps, or end plates, may be connected to the monolithic body and may define fluid flow passages and/or manifolds that interconnect two or more of conduits 144.

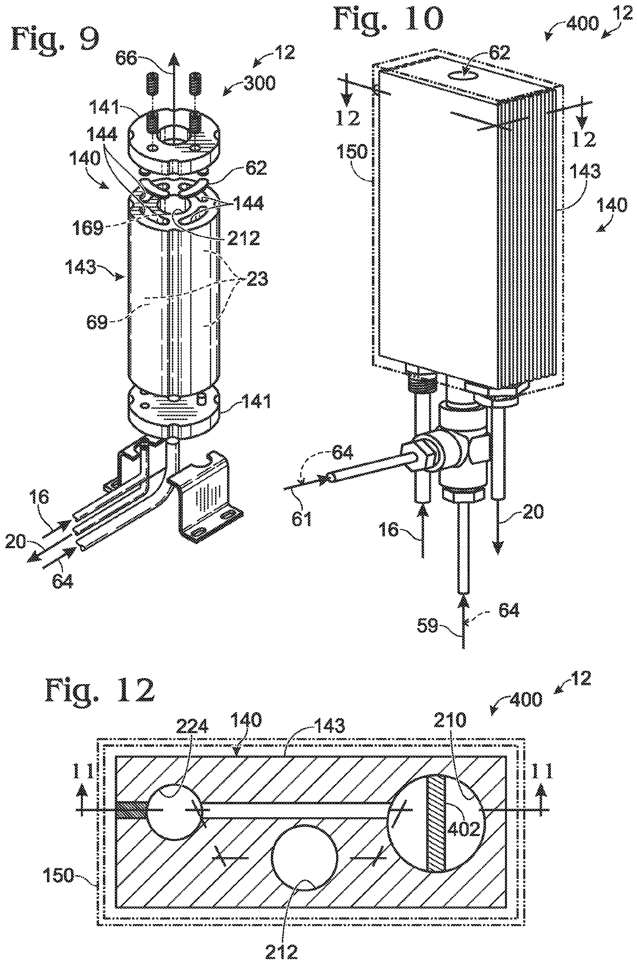

Turning now to Figs. 9-16, illustrative, non-exclusive examples of hydrogen-producing assemblies 12 according to the present disclosure and various component parts thereof are illustrated. Where appropriate, the reference numerals from the schematic illustrations of Figs. 1-8 are used to designate corresponding parts of hydrogen-producing assemblies 12 according to the present disclosure. However, the examples of Figs. 9-16 are non-exclusive and do not limit the present disclosure to the illustrated embodiments. That is, neither hydrogen-producing assemblies nor various component parts thereof are limited to the specific embodiments disclosed and illustrated in Figs. 9-16, and hydrogen-producing assemblies according to the present disclosure may incorporate any number of the various aspects, configurations, characteristics, properties, etc. illustrated and described with respect to the embodiments of Figs. 9-16, of Figs. 1-8, as well as variations thereof and without requiring the inclusion of all such aspects, configurations, characteristics, properties, etc. For the purpose of brevity, each previously discussed component part, or variant thereof, may not be discussed again with respect to Figs. 9-16; however, it is within the scope of the present disclosure that the previously discussed features, materials, variants, etc. may be utilized with the illustrated embodiments of Figs. 9-16. Similarly, it is also within the scope of the present disclosure that all of the component parts, and portions thereof, that are illustrated in Figs. 9-16 are not required to all embodiments according to the present disclosure.

The following illustrative, non-exclusive examples will discuss hydrogen-producing assemblies 12 according to the present disclosure utilized to produce hydrogen gas via a steam reforming reaction of methanol and water to provide sufficient hydrogen gas to meet the hydrogen demands of a 250 Watt proton exchange membrane (PEM, or solid polymer) fuel cell stack. However, it is within the scope of the present disclosure that the fuel processing assemblies may be used to supply a greater amount of hydrogen gas, utilize a different hydrogen-producing reaction, and/or be used with other forms of fuel cell stacks or other devices that have a demand for hydrogen gas. Similarly, it is within the scope of the present disclosure that the hydrogen-producing assemblies described herein may be utilized for other endothermic reactions that require an exothermic heat source. Furthermore, the following discussion will describe heat transfer body 140 as being formed from aluminum, but it is within the scope of the present disclosure that any of the above-discussed materials may be utilized, as appropriate.

An illustrative, non-exclusive example of a hydrogen-producing assembly 12 with a heat transfer body 140 according to the present disclosure is shown in Fig. 9, and is indicated generally at 300. As illustrated, the heat transfer body includes a monolithic body 143 that may be formed by aluminum extrusion. Monolithic body 143 includes a center burner chamber, or conduit, 212 and four side chambers, or conduits, 144. Accordingly, hydrogen-producing assembly 300 may be described as an example of a hydrogen-producing assembly having a monolithic body with a cross-section generally corresponding to that illustrated in Fig. 8. The feedstock(s), which also may be referred to as reactant(s), is (are) introduced to one of the side chambers, as indicated by the feed stream 16, which can serve as the vaporization region 69 for liquid components (such as a methanol water mixture) or as a preheat chamber for gas components. While not required to all embodiments, it is within the scope of the present disclosure that this chamber (and/or any other vaporization region 69) may be filled with, or otherwise contain particulate or other suitable thermally conductive matter to enhance heat transfer. Illustrative, non-exclusive examples of suitable thermally conductive matter include wire cuts, pellets, extrudates, and beads. This optional thermally conductive matter is schematically illustrated at 169 in Figs. 1-2 and 9.

When present in such a chamber or other vaporization region, this thermally conductive matter may be formed from any suitable thermally conductive metal or other material, and it is within the scope of the present disclosure that the thermally conductive matter may be formed from the same material as heat transfer body 140 and/or monolithic body 143. Illustrative, non-exclusive examples of suitable materials include aluminum, stainless steel, and ceramics. The thermally conductive matter should permit fluid flow through the chamber or other vaporization region, while also increasing heat transfer in this chamber or vaporization region. The particulate or other matter may act as nucleation sites for inducing smooth boiling of the feedstock(s) within the chamber and/or suppress local overheating and uncontrolled (explosive, violent, or unstable) boiling and vaporization. This may result in less, or reduced, pressure fluctuations within the chamber (or vaporization region), compared to if such thermally conductive matter was not present therein.

The reactant(s) then flows sequentially to the other three chambers, which may contain a steam reforming catalyst 23 of any suitable form, including wash-coated catalyst and/or solid catalyst that fills, or at least partially fills, the chambers. The side conduits may be hermetized with top and bottom end cap manifolds 141, which are designed to form plumbing connections and interconnections between the chambers, as discussed herein. A reformate gas stream is produced and exits the hydrogen-producing assembly as indicated at 20.

The center chamber receives a fuel-air stream 64 and serves as the burner 62 that supplies the heat essential for vaporization and the endothermic hydrogen-producing reaction. An exhaust stream 66 exits the heat transfer body and may be vented to the ambient environment or alternatively be used in other aspects of fuel processing systems, fuel cell systems, and the like, for example, to heat components thereof. In this embodiment, gas combustibles are ideal candidates for the burner fuel, although burner 62 may additionally or alternatively utilize liquid combustibles as its fuel. Specifically, in a fuel processing system, an ideal fuel is the byproduct stream from a hydrogen purification unit or other separation assembly and/or the anode exhaust gas from a reformate tolerant PEM fuel cell stack. The center burner conduit may be filled with a fuel-air mixing structure, as discussed herein, to enhance fuel and air mixing and heat transfer to the body. Alternatively, the center burner conduit may be partially or completely empty, such as when additional heat transfer and/or fuel/air mixing is not required and/or when it is desirable to reduce pressure drop within the burner.

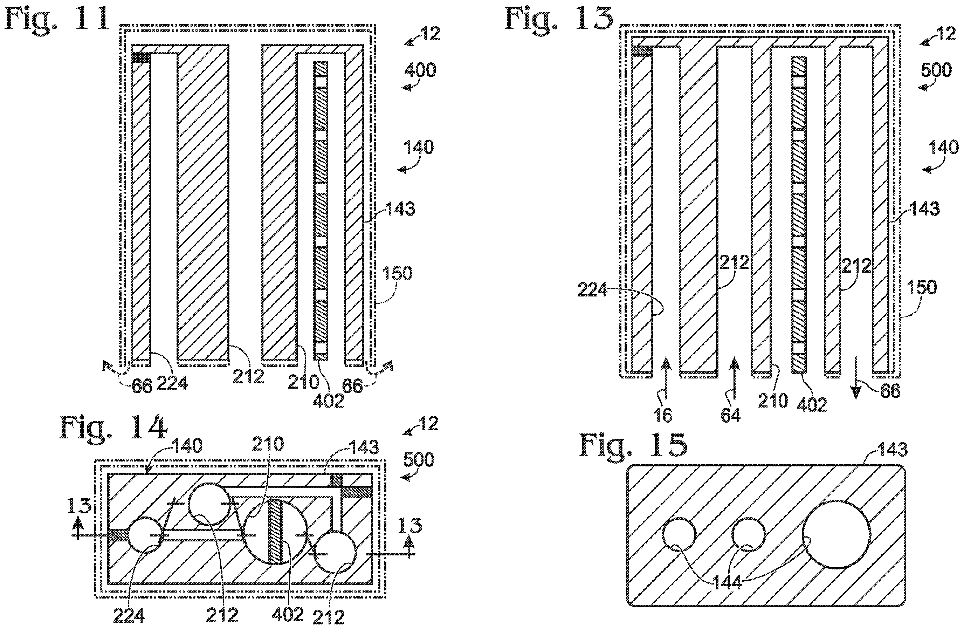

Another illustrative, non-exclusive example of a hydrogen-producing assembly 12 according to the present disclosure is illustrated in Figs. 10-12, and is generally indicated at 400. Hydrogen-producing assembly 400 includes a heat transfer body 140 that comprises a monolithic body 143. That is, heat transfer body 140 does not include end cap manifolds. The monolithic body of hydrogen-producing assembly 400 takes the form of a rectangular aluminum block, which can be easily machined to allow fast prototyping or casted for large quantity production. As illustrated in Fig. 10, a fuel stream 59 and an air stream 61 are combined to form fuel-air stream 64 prior to delivery to the burner conduit. As illustrated in cross-section in Figs. 11-12, the monolithic body of assembly 400 has two side chambers, or conduits, including a vaporization conduit 224 and a reformer conduit 210, which are connected through internal porting, as seen in Fig. 11. To further enhance heat transfer in the hydrogen-producing region, an optional perforated conductive bar 402 (such as may be formed from aluminum or another suitable thermally conductive material) may be disposed in the reformer conduit, as shown in Fig. 12. Bar 402, when present, may extend between the internal sidewalls of the hydrogen-producing region and may be formed with a sufficient thickness to promote conductive heat transfer through the hydrogen-producing region. Illustrative, non-exclusive examples of suitable constructions for conductive bar 402 are disclosed in U.S. Patent Application Serial No. 12/182,959.

As illustrated in dashed lines in Fig. 11, a hydrogen-producing assembly 400 may (but is not required to) further include an outer housing 150, in which the monolithic body is disposed. Such a configuration may further improve thermal efficiency of the hydrogen-producing assembly. As seen in Fig. 11, when an outer housing is provided, the exhaust stream 66 may be routed from the burner conduit through passages formed between the outer housing and the monolithic body. The outer housing may include and/or be formed of insulative material to further enhance the efficiency of heat transfer from the exhaust stream(s) to the vaporization and reforming regions of the hydrogen-producing assembly. Additionally or alternatively, as shown in Fig. 12, the sides of the monolithic body may include surface features, such as heat transfer fins, or the like, to increase contact area of the monolithic body and the exhaust stream(s). Additionally or alternatively, the outer surface of the monolithic body may be anodized to form an oxide layer to act as an insulation barrier reducing heat loss to the environment.

Another illustrative, non-exclusive example of a heat transfer body 140 of a hydrogen-producing assembly 12 according to the present disclosure is shown in cross-section in Figs. 13-14, with the hydrogen-producing assembly indicated generally at 500. The depicted embodiment of Figs. 13-14 includes two burner conduits 212 to further improve system thermal efficiency. Also, as illustrated, the monolithic body 143 may be disposed in an outer housing 150 (shown in Fig. 14) that it is not in a spaced apart relation to the monolithic body, and therefore that does not define exhaust passages between the monolithic body and the outer housing, as does the optional embodiment of Fig. 11 discussed above. Such a configuration may improve thermal efficiency of the hydrogen-producing assembly 500 by utilizing an outer housing with insulative properties.

Figs. 15-16 provide further illustrative, non-exclusive examples of suitable constructions for monolithic bodies 143 of hydrogen-producing assemblies according to the present disclosure, and illustrate examples of conduits 144, which may include one or more of a reformer conduit, a burner conduit, and a vaporizer conduit.

In many applications, it is desirable for a hydrogen-producing assembly 12 and/or a fuel processing system 10 to produce a product hydrogen stream 14 containing at least substantially pure hydrogen gas. Accordingly, the fuel processing assembly may utilize a process that inherently produces sufficiently pure hydrogen gas. When the output stream contains sufficiently pure hydrogen gas and/or sufficiently low concentrations of one or more non-hydrogen components for a particular application, product hydrogen stream 14 may be formed directly from output stream 20. However, in many hydrogen-producing processes, output stream 20 will be a mixed gas stream that contains hydrogen gas as a majority component along with other gases. Similarly, in many applications, the output stream 20 may be substantially pure hydrogen but still contain concentrations of one or more non-hydrogen components that are harmful or otherwise undesirable in the application for which the product hydrogen stream is intended to be used.

Accordingly, fuel processing system 10 may (but is not required to) further include a purification region 24, in which a hydrogen-rich stream 26 is produced from the output, or mixed gas, stream. Hydrogen-rich stream 26 contains at least one of a greater hydrogen concentration than output stream 20 and a reduced concentration of one or more of the other gases or impurities that were present in the output stream. Purification region 24 is schematically illustrated in Fig. 1, where output stream 20 is shown being delivered to an optional purification region 24. As shown in Fig. 1, at least a portion of hydrogen-rich stream 26 forms product hydrogen stream 14. Accordingly, hydrogen-rich stream 26 and product hydrogen stream 14 may be the same stream and have the same compositions and flow rates. However, it is also within the scope of the present disclosure that some of the purified hydrogen gas in hydrogen-rich stream 26 may be stored for later use, such as in a suitable hydrogen storage assembly, subjected to a further purification process, and/or consumed by the fuel processing system (such as for use as a fuel stream for a heating assembly).

Purification region 24 may, but is not required to, produce at least one byproduct stream 28. When present, byproduct stream 28 may be exhausted, sent to a burner or other combustion source, used as a heated fluid stream, stored for later use, or otherwise utilized, stored or disposed of. In some embodiments, the byproduct stream may be delivered to the burner or other combustion-based heating assembly 60 for use as a fuel stream, such as to heat at least the hydrogen-producing region of the fuel processing assembly. In such an embodiment, it is further within the scope of the present disclosure that the byproduct stream may (but is not required to) have sufficient fuel value, when combusted by the burner or other heating assembly, to maintain the hydrogen-producing region at a suitable hydrogen-producing temperature.

It is within the scope of the disclosure that byproduct stream 28 may be emitted from the purification region as a continuous stream responsive to the delivery of output stream 20 to the purification region, or intermittently, such as in a batch process or when the byproduct portion of the output stream is retained at least temporarily in the purification region. When purification region 24 produces a byproduct stream 28, the purification region may additionally or alternatively be referred to as a separation region, as the region separates the (mixed gas) output stream 20 into hydrogen-rich stream 26 and byproduct stream 28. The purification region, when present, may form a portion of hydrogen-producing assembly 12, or may be in fluid communication therewith, such as to receive the output stream therefrom.

Purification region 24 includes any suitable device, or combination of devices, that are adapted to reduce the concentration of at least one component of output stream 20. In most applications, hydrogen-rich stream 26 will have a greater hydrogen concentration than output, or mixed gas, stream 20. However, it is also within the scope of the disclosure that the hydrogen-rich stream will have a reduced concentration of one or more non-hydrogen components that were present in output stream 20, yet have the same, or even a reduced, overall hydrogen concentration as the output stream. For example, in some applications where product hydrogen stream 14 may be used, certain impurities, or non-hydrogen components, are more harmful than others. As a specific example, in many conventional fuel cell systems (such as proton exchange membrane fuel cell systems), carbon monoxide may damage a fuel cell stack if it is present in even a few parts per million, while other non-hydrogen components that may be present in stream 20, such as water, will not damage the stack even if present in much greater concentrations. Therefore, in such an application, a suitable purification region may not increase the overall hydrogen concentration, but it will reduce the concentration of a non-hydrogen component that is harmful, or potentially harmful, to the desired application for the product hydrogen stream.

Illustrative, non-exclusive examples of suitable devices for purification region 24 include one or more hydrogen-selective membranes 30, chemical carbon monoxide removal assemblies 32, and pressure swing adsorption systems 38. It is within the scope of the disclosure that purification region 24 may include more than one type of purification device, and that these devices may have the same or different structures and/or operate by the same or different mechanisms. As discussed, hydrogen-producing fuel processing system 10 may include at least one restrictive orifice or other flow restrictor downstream of at least one purification region, such as associated with one or more of the product hydrogen stream, hydrogen-rich stream, and/or byproduct stream.

Hydrogen-selective membranes 30 are permeable to hydrogen gas, but are at least substantially, if not completely, impermeable to other components of output stream 20. Membranes 30 may be formed of any hydrogen-permeable material suitable for use in the operating environment and parameters in which purification region 24 is operated. Examples of suitable materials for membranes 30 include palladium and palladium alloys, and especially thin films of such metals and metal alloys. Palladium alloys have proven particularly effective, especially palladium with 35 wt% to 45 wt% copper. A palladium-copper alloy that contains approximately 40 wt% copper has proven particularly effective, although other relative concentrations and components may be used within the scope of the disclosure.

Hydrogen-selective membranes are typically very thin, such as a thin foil that is approximately 0.001 inches thick. It is within the scope of the present disclosure, however, that the membranes may be formed from other hydrogen-permeable and/or hydrogen-selective materials, including metals and metal alloys other than those discussed above, as well as non-metallic materials and compositions, and that the membranes may have thicknesses that are greater or less than those discussed above. For example, the membrane may be made thinner, with commensurate increase in hydrogen flux. Examples of suitable mechanisms for reducing the thickness of the membranes include rolling, sputtering, and etching. Examples of various membranes, membrane configurations, and methods for preparing the same are disclosed in U.S. Patent Nos. 6,221,117, 6,319,306, and 6,537,352.

Chemical carbon monoxide removal assemblies 32 are devices that chemically react carbon monoxide and/or other undesirable components of stream 20, if present in output stream 20, to form other compositions that are not as potentially harmful. Examples of chemical carbon monoxide removal assemblies include water-gas shift reactors and other devices that convert carbon monoxide to carbon dioxide, and methanation catalyst beds that convert carbon monoxide and hydrogen to methane and water. It is within the scope of the disclosure that fuel processing system 10 may include more than one type and/or number of chemical removal assemblies 32. In addition, the chemical removal assemblies may be positioned or otherwise included in one or more chambers of body 140 that are in fluid communication with the upstream and downstream processes.

Pressure swing adsorption (PSA) is a chemical process in which gaseous impurities are removed from output stream 20 based on the principle that certain gases, under the proper conditions of temperature and pressure, will be adsorbed onto an adsorbent material more strongly than other gases. Typically, it is the impurities that are adsorbed and removed from output stream 20. The success of using PSA for hydrogen purification is due to the relatively strong adsorption of common impurity gases (such as CO, CO₂, hydrocarbons including CH₄, and N₂) on the adsorbent material. Hydrogen adsorbs only very weakly and so hydrogen passes through the adsorbent bed while the impurities are retained on the adsorbent material. Impurity gases such as NH₃, H₂S, and H₂O adsorb very strongly on the adsorbent material and are removed from stream 20 along with other impurities. If the adsorbent material is going to be regenerated and these impurities are present in stream 20, purification region 24 preferably includes a suitable device that is adapted to remove these impurities prior to delivery of stream 20 to the adsorbent material because it is more difficult to desorb these impurities.

Adsorption of impurity gases occurs at elevated pressure. When the pressure is reduced, the impurities are desorbed from the adsorbent material, thus regenerating the adsorbent material. Typically, PSA is a cyclic process and requires at least two beds for continuous (as opposed to batch) operation. Examples of suitable adsorbent materials that may be used in adsorbent beds are activated carbon and zeolites, especially 5 Å (5 angstrom) zeolites. The adsorbent material is commonly in the form of pellets, granules, or extrudate and it is placed in a cylindrical pressure vessel utilizing a conventional packed-bed configuration. Other suitable adsorbent material compositions, forms, and configurations may be used.

PSA system 38 also provides an example of a device for use in purification region 24 in which the byproducts, or removed components, are not directly exhausted from the region as a gas stream concurrently with the purification of the output stream. Instead, these byproduct components are removed when the adsorbent material is regenerated or otherwise removed from the purification region.

In Fig. 1, purification region 24 is shown downstream from hydrogen-producing assembly 12. It is within the scope of the disclosure that region 24, when present, may alternatively form a portion of hydrogen-producing assembly 12, as is schematically illustrated in dashed lines in Fig. 1. In such an embodiment, the separation region may be thermally integrated within heat transfer body 140 along with the other components of the fuel processing assembly that are housed within the body. It is also within the scope of the disclosure that purification region 24 may include portions within and external to hydrogen-producing assembly 12.

In the context of a hydrogen-producing assembly, or fuel processing system, that is adapted to produce a product hydrogen stream that will be used as a feed, or fuel, stream for a fuel cell stack, the fuel processing assembly may be adapted to produce substantially pure hydrogen gas, or even pure hydrogen gas. For the purposes of the present disclosure, substantially pure hydrogen gas refers to hydrogen gas that is greater than 90% pure, and which may be greater than 95% pure, greater than 99% pure, and even greater than 99.5% pure. Illustrative, non-exclusive examples of components and configurations of fuel processing assemblies and fuel processing systems for producing streams of at least substantially pure hydrogen gas are disclosed in U.S. Patent Nos. 6,319,306, 6,221,117, 5,997,594, 5,861,137, and U.S. Patent Publication Nos. 2001/0045061, 2003/0192251, 2003/0223926, 2006/0090397, and 2007/0062116.

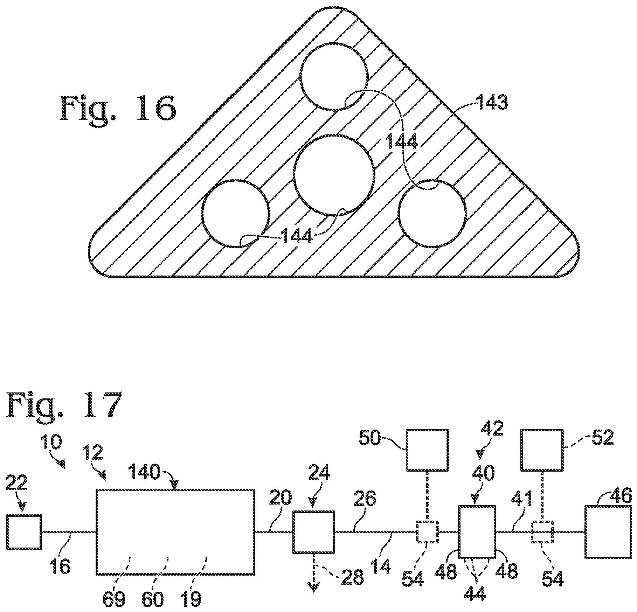

As discussed, product hydrogen stream 14 may be used in a variety of applications, including applications where high purity hydrogen gas is utilized. An example of such an application is as a fuel, or feed, stream for a fuel cell stack. A fuel cell stack is a device that produces an electrical potential from a source of protons, such as hydrogen gas, and an oxidant, such as oxygen gas. Accordingly, a fuel cell stack may be adapted to receive at least a portion of product hydrogen stream 14 and a stream of oxygen (which is typically delivered as an air stream), and to produce an electric current therefrom. This is schematically illustrated in Fig. 17, in which a fuel cell stack is indicated at 40 and produces an electric current, or electrical output, which is schematically illustrated at 41. In such a configuration, in which the fuel processing assembly or fuel processing system is coupled to a fuel cell stack, the resulting system may be referred to as a fuel cell system 42 because it includes a fuel cell stack and a source of fuel for the fuel cell stack. It is within the scope of the present disclosure that fuel processing assemblies, feedstock delivery systems, and heating assemblies according to the present disclosure may be used in applications that do not include a fuel cell stack.

Fuel cell stack 40 contains at least one, and typically multiple, fuel cells 44 that are adapted to produce an electric current from an oxidant, such as air, oxygen-enriched air, or oxygen gas, and the portion of the product hydrogen stream 14 delivered thereto. A fuel cell stack typically includes multiple fuel cells joined together between common end plates 48, which contain fluid delivery/removal conduits, although this construction is not required to all embodiments. Examples of suitable fuel cells include proton exchange membrane (PEM) fuel cells and alkaline fuel cells. Others include solid oxide fuel cells, phosphoric acid fuel cells, and molten carbonate fuel cells.

The electric current, or electrical output, produced by stack 40 may be used to satisfy the energy demands, or applied load, of at least one associated energy-consuming device 46. Illustrative examples of devices 46 include, but should not be limited to, motor vehicles, recreational vehicles, construction or industrial vehicles, boats or other sea craft, tools, lights or lighting assemblies, appliances (such as household or other appliances), households or other dwellings, offices or other commercial establishments, computers, signaling or communication equipment, battery chargers, etc. Similarly, fuel cell stack 40 may be used to satisfy the power requirements of fuel cell system 42, which may be referred to as the balance-of-plant power requirements of the fuel cell system. It should be understood that device 46 is schematically illustrated in Fig. 17 and is meant to represent one or more devices, or collection of devices, that are adapted to draw electric current from the fuel cell system.

Fuel cell stack 40 may receive all of product hydrogen stream 14. Some or all of stream 14 may additionally, or alternatively, be delivered, via a suitable conduit, for use in another hydrogen-consuming process, burned for fuel or heat, or stored for later use. As an illustrative example, an optional hydrogen storage device 50 is shown in Fig. 17. Fuel processing and/or fuel cell systems according to the present disclosure may, but are not required to, include at least one hydrogen storage device. Device 50 is adapted to store at least a portion of product hydrogen stream 14. For example, when the demand for hydrogen gas by stack 40 is less than the hydrogen output of fuel processing assembly 12, the excess hydrogen gas may be stored in device 50. Illustrative examples of suitable hydrogen storage devices include hydride beds and pressurized tanks. Although not required, a benefit of fuel processing system 10 or fuel cell system 42 including a supply of stored hydrogen is that this supply may be used to satisfy the hydrogen requirements of stack 40, or the other application for which stream 14 is used, in situations when fuel processing assembly 12 is not able to meet these hydrogen demands. Examples of these situations include when the fuel processing assembly is starting up from a cold, or inactive state, ramping up (being heated and/or pressurized) from an idle state, offline for maintenance or repair, and when the fuel cell stack or application is demanding a greater flow rate of hydrogen gas than the maximum available production from the fuel processing assembly. Additionally or alternatively, the stored hydrogen may also be used as a combustible fuel stream to heat the fuel processing system or fuel cell system. Fuel processing systems that are not directly associated with a fuel cell stack may still include at least one hydrogen-storage device, thereby enabling the product hydrogen streams from these fuel processing systems to also be stored for later use.

Fuel cell system 42 may also include at least one battery 52 or other suitable energy-storage, or electricity-storing, device that is adapted to store the electric potential, or power output, produced by stack 40. When present, a battery may be utilized to power an electric heater for heating a monolithic body, as discussed herein. For example, a fuel system according to the present disclosure may be configured to power an electric heater with the battery in response to a primary power source becoming unavailable to power an energy-consuming device and/or the electric heater. Illustrative, non-exclusive examples of other energy storage devices that may be used include flywheels and capacitors, such as ultracapacitors or supercapacitors. Similar to the above discussion regarding excess hydrogen, fuel cell stack 40 may produce a power output in excess of that necessary to satisfy the load exerted, or applied, by device 46, including the load required to power fuel cell system 42. In further similarity to the above discussion of excess hydrogen gas, this excess power output may be used in other applications outside of the fuel cell system and/or stored for later use by the fuel cell system. For example, the battery or other storage device may provide power for use by system 42 during startup or other applications in which the system is not producing electricity and/or hydrogen gas. In Fig. 17 flow-regulating structures are generally indicated at 54 and schematically represent any suitable manifolds, valves, controllers, switches and the like for selectively delivering hydrogen and the fuel cell stack's power output to device 50 and battery 52, respectively, and to draw the stored hydrogen and stored power output therefrom.

Fuel cell systems according to the present disclosure may be used as backup power systems. An example of backup power systems that utilize fuel cell stacks is disclosed in U.S. Patent Application Serial No. 61/186,732.

The following enumerated paragraphs represent illustrative, non-exclusive ways of describing inventions according to the present disclosure. Other ways of describing inventions according to the present disclosure are also within the scope of the present disclosure.
A1 A hydrogen-producing assembly, comprising:
   a heat conductive body having a length and defining:
      a reforming conduit extending longitudinally through the heat conductive body;
      a feed inlet to the reforming conduit for receiving a feed stream into the reforming conduit;
      a reformate outlet from the reforming conduit for delivering a reformate gas stream containing hydrogen gas from the reforming conduit;
      a burner conduit extending through the heat conductive body along a central longitudinal axis therein and adjacent the reforming conduit; wherein the reforming conduit is spaced radially from the burner conduit;
      a fuel-air inlet to the burner conduit for receiving a fuel-air stream into the burner conduit; and
      an exhaust outlet from the burner conduit for delivering an exhaust stream from the burner conduit;
   a reforming catalyst disposed within the reforming conduit and configured to catalyze production of the reformate gas stream from the feed stream via an endothermic reaction within a reforming temperature range;
   a combustion catalyst disposed within the burner conduit only adjacent to the exhaust outlet and configured to catalyze ignition of the fuel-air stream via an exothermic reaction; and
   a fuel-air mixing structure disposed within the burner conduit and configured to support combustion of the fuel-air stream in a combustion region of the burner conduit adjacent the fuel-air inlet;
   wherein the heat conductive body extends between the burner conduit and the reforming conduit, surrounds the burner conduit and the reformer conduit and is constructed to conduct heat generated by the exothermic reaction of the combustion of the fuel-air stream in the burner conduit from the burner conduit to the reforming conduit to maintain the reforming catalyst within the reforming temperature range.
A2 The hydrogen-producing assembly of paragraph A1, wherein the reforming conduit extends generally parallel to the burner conduit.
A3 The hydrogen-producing assembly of any of paragraphs A1-A2, wherein the combustion region extends only for less than one half of the length of the heat conductive body.
A4 The hydrogen-producing assembly of any of paragraphs A1-A3, wherein the fuel-air mixing structure is further configured to propagate ignition of the fuel-air stream from the combustion catalyst toward the fuel-air inlet.
A5 The hydrogen-producing assembly of any of paragraphs A1-A4, wherein the fuel-air mixing structure extends between the combustion catalyst and the combustion region.
A6 The hydrogen-producing assembly of any of paragraphs A1-A5, wherein the fuel-air mixing structure extends between the combustion catalyst and the fuel-air inlet.
A7 The hydrogen-producing assembly of any of paragraphs A1-A4, wherein the fuel-air mixing structure extends adjacent the exhaust outlet and adjacent the fuel-air inlet.
A8 The hydrogen-producing assembly of any of paragraphs A1-A4, wherein the fuel-air mixing structure extends from adjacent the exhaust outlet to adjacent the fuel-air inlet.
A9 The hydrogen-producing assembly of paragraph A8, wherein the combustion catalyst is disposed on a portion of the fuel-air mixing structure adjacent the exhaust outlet.
A10 The hydrogen-producing assembly of paragraph A8, wherein the combustion catalyst is disposed only on a portion of the fuel-air mixing structure adjacent the exhaust outlet, wherein the portion extends for less than one eighth of the length of the heat conductive body.
A11 The hydrogen-producing assembly of paragraph A8, wherein the combustion catalyst is disposed only on a portion of the fuel-air mixing structure adjacent the exhaust outlet, wherein the portion extends for less than one fourth of the length of the heat conductive body.
A12 The hydrogen-producing assembly of any of paragraphs A1-A7, wherein the combustion catalyst is disposed in spaced-apart regions of the burner conduit.
A13 The hydrogen-producing assembly of any of paragraphs A1-A12, wherein the fuel-air mixing structure is configured to support flameless combustion of the fuel-air stream in the combustion region of the burner conduit.
A14 The hydrogen-producing assembly of any of paragraphs A1-A13, wherein the fuel-air mixing structure includes a porous media.
A15 The hydrogen-producing assembly of any of paragraphs A1-A14, wherein the porous media includes a ceramic material.
A16 The hydrogen-producing assembly of any of paragraphs A1-A15, wherein the porous media includes a metal material.
A17 The hydrogen-producing assembly of any of paragraphs A1-A16, wherein the porous media includes packed pellets.
A18 The hydrogen-producing assembly of any of paragraphs A1-A17, wherein the porous media includes bundles of fiber.
A19 The hydrogen-producing assembly of any of paragraphs A1-A18, wherein the porous media includes a foam material.
A20 The hydrogen producing assembly of any of paragraphs A1-A19, wherein the fuel-air mixing structure extends only through the combustion region.
A21 The hydrogen-producing assembly of any of paragraphs A1-A20, wherein the burner conduit is defined by a burner conduit wall, and wherein the combustion catalyst is disposed only on a portion of the burner conduit wall adjacent the exhaust outlet.
A22 The hydrogen-producing assembly of paragraph A21, wherein the portion of the burner conduit wall extends for less than one eighth of the length of the heat conductive body.
A23 The hydrogen-producing assembly of paragraph A21, wherein the portion of the burner conduit wall extends for less than one fourth of the length of the heat conductive body.
A24 The hydrogen-producing assembly of any of paragraphs A1-A20, wherein the combustion catalyst is disposed on the fuel-air mixing structure.
A25 The hydrogen-producing assembly of paragraph A24, wherein the combustion catalyst is disposed on spaced-apart regions of the fuel-air mixing structure.
A26 The hydrogen-producing assembly of any of paragraphs A1-A25,
   wherein the heat conductive body further defines:
   an exhaust conduit extending through the heat conductive body and adjacent the reforming conduit, wherein the exhaust conduit is in fluid communication with the exhaust outlet from the burner conduit;
   a hot-exhaust inlet to the exhaust conduit for receiving the exhaust stream from the burner conduit; and
   a cooled-exhaust outlet from the exhaust conduit for delivering the exhaust stream from the exhaust conduit; and
   wherein the heat conductive body is constructed to conduct heat from the exhaust stream in the exhaust conduit to the reforming conduit to maintain the reforming catalyst within the reforming temperature range.
A27 The hydrogen-producing assembly of paragraph A26, wherein the reformer conduit and the exhaust conduit extend longitudinally through the heat conductive body in a concentric pattern relative to the burner conduit.
A28 The hydrogen-producing assembly of any of paragraphs A1-A27, further comprising:
   an outer housing;
   wherein the heat conductive body is disposed at least partially within the outer housing in a spaced-apart relation relative to the outer housing to define an exhaust conduit between the heat conductive body and the outer housing, wherein the exhaust conduit is in fluid communication with the exhaust outlet for receiving the exhaust stream from the burner conduit; and
   wherein the heat conductive body is constructed to conduct heat from the exhaust stream in the exhaust conduit to the reforming conduit to maintain the reforming catalyst within the reforming temperature range.
A29 The hydrogen-producing assembly of any of paragraphs A1-A28, further comprising:
   an end cap manifold;
   wherein the heat conductive body further defines:
      a vaporizer conduit extending longitudinally through the heat conductive body and adjacent the burner conduit, wherein the vaporizer conduit is in fluid communication with the reforming conduit via the end cap manifold;
      a vaporizer inlet to the vaporizer conduit for receiving the feed stream into the vaporizer conduit from a feed source; and
      a vaporizer outlet from the vaporizer conduit for delivering the feed stream to the reforming conduit via the end cap manifold; and
   wherein the heat conductive body is constructed to conduct heat generated by the exothermic reaction of the combustion of the fuel-air stream in the burner conduit from the burner conduit to the vaporizer conduit to vaporize liquid portions of the feed stream.
A30 The hydrogen-producing assembly of any of paragraphs A1-A29, further comprising:
   an electric resistance heater positioned relative to the heat conductive body to heat the heat conductive body.
A31 The hydrogen-producing assembly of paragraph A30, wherein the heat conductive body is constructed to conduct heat from the electric resistance heater to the reforming conduit to heat the reforming catalyst to within the reforming temperature range.
A32 The hydrogen-producing assembly of paragraph A31, wherein the hydrogen-producing assembly is configured to deactivate the electric resistance heater in response to the combustion of the fuel-air stream in the burner conduit generating sufficient heat to maintain the reforming catalyst within the reforming temperature range.
A33 The hydrogen-producing assembly of paragraph A31, wherein the hydrogen-producing assembly is configured to deactivate the electric resistance heater after a predetermined period of time.
A34 The hydrogen-producing assembly of any of paragraphs A30-A33, wherein the heat conductive body is constructed to conduct heat from the electric resistance heater to the burner conduit to heat the fuel-air mixing structure to an ignition temperature at which the combustion catalyst catalyzes the ignition of the fuel-air stream.
A35 The hydrogen-producing assembly of any of paragraphs A30-A34, wherein the electric resistance heater at least partially encircles the heat conductive body.
A36 The hydrogen-producing assembly of any of paragraphs A30-A35, wherein the heat conductive body further defines a heater conduit; and
   wherein the electric resistance heater is positioned at least partially within the heater conduit.
A37 The hydrogen-producing assembly of any of paragraphs A1-A36, wherein the heat conductive body is at least partially formed from one of extrusion, machining, casting, stamping, brazing, sintering, and welding.
A38 The hydrogen-producing assembly of any of paragraphs A1-A37, wherein the heat conductive body is constructed of at least one of aluminum, aluminum alloy, copper, and copper alloy.
A39 The hydrogen-producing assembly of any of paragraphs A1-A38, wherein the heat conductive body is not constructed of steel.
A40 The hydrogen-producing assembly of any of paragraphs A1-A40, wherein the thermal conductivity of the heat conductive body is one of at least 50%, at least 100%, at least 200%, at least 400%, at least 800%, and at least 1,600% greater than the thermal conductivity of steel.
A41 The hydrogen-producing assembly of any of paragraphs A1 to A40, further comprising:
   at least one end cap manifold;
   wherein the reformer conduit is defined by:
      a first reformer-conduit portion extending the length of the heat conductive body; and
      a second reformer-conduit portion extending the length of the heat conductive body and in fluid communication with the first reformer-conduit portion via the at least one end cap manifold.
A42 The hydrogen producing assembly of any of paragraphs A1 to A40, further comprising:
   at least one an end cap manifold;
   wherein the heat conductive body further defines:
      a vaporizer conduit extending longitudinally through the heat conductive body and adjacent the burner conduit and spaced radially out from the burner conduit, wherein the vaporizer conduit is in fluid communication with the reforming conduit via the at least one end cap manifold;
      a vaporizer inlet to the vaporizer conduit for receiving the feed stream into the vaporizer conduit from a feed source; and
      a vaporizer outlet from the vaporizer conduit for delivering the feed stream to the reforming conduit via the at least one end cap manifold; and
   wherein the heat conductive body is constructed to conduct heat generated by the exothermic reaction of the combustion of the fuel-air stream in the burner conduit from the burner conduit to the vaporizer conduit to vaporize liquid portions of the feed stream.
A43 The hydrogen-producing assembly of paragraph A42, wherein the reformer conduit and the vaporizer conduit extend through the heat conductive body in a concentric pattern relative to the burner conduit.
A44 The hydrogen-producing assembly of any of paragraphs A41-A43,
   wherein the at least one end cap manifold includes a first end cap manifold and a second end cap manifold;
   wherein the second reformer-conduit portion extends the length of the heat conductive body and is in fluid communication with the first reformer-conduit portion via the first end cap manifold; and
   wherein the reformer conduit is further defined by a third reformer-conduit portion extending the length of the heat conductive body and is in fluid communication with the second reformer-conduit portion via the second end cap manifold.
A45 The hydrogen-producing assembly of any of paragraphs A1-A44, wherein the heat conductive body is free of external heat transfer fins.
A46 The hydrogen-producing assembly of any of paragraphs A1-A45, wherein the heat conductive body is constructed of two or more portions joined together.
A47 The hydrogen-producing assembly of paragraph A46, wherein the two or more portions are configured to be selectively separated.
A48 The hydrogen-producing assembly of paragraph A46, wherein the two or more portions are not configured to be selectively separated.
A49 The hydrogen-producing assembly of any of paragraphs A1-A48, wherein the reformate gas stream further contains other gases, the hydrogen-producing assembly further comprising:
   a hydrogen-purification assembly fluidly coupled to the reformate outlet for receiving the reformate gas stream, wherein the hydrogen-purification assembly is configured to separate the reformate gas stream into a permeate stream and a byproduct stream, wherein the permeate stream has at least one of a greater concentration of hydrogen gas and a lower concentration of the other gases than the reformate gas stream, and further wherein the byproduct stream contains at least a substantial portion of the other gases.
A50 The hydrogen-producing assembly of paragraph A49, wherein the hydrogen-purification assembly includes at least one hydrogen-selective membrane.
A51 The hydrogen-producing assembly of any of paragraphs A49-A50, wherein the hydrogen-purification assembly includes a pressure swing adsorption assembly.
A52 The hydrogen-producing assembly of any of paragraphs A49-A51, wherein the hydrogen-purification assembly includes a chemical carbon monoxide removal assembly.
A53 The hydrogen-producing assembly of any of paragraphs A1-A52, wherein the heat conductive body includes a monolithic body.
A54 The hydrogen-producing assembly of any of paragraphs A1-A52, wherein the heat conductive body is a monolithic body.
A55 A method of producing hydrogen gas using the hydrogen-producing assembly of any of paragraphs A1-A54.
A56 A fuel cell system, comprising:
   the hydrogen-producing assembly of any of paragraphs A1-A54; and
   a fuel cell stack in fluid communication with the reformate outlet of the heat conductive body of the hydrogen-producing assembly and configured to produce an electrical output from an oxidant and at least a portion of the hydrogen gas of the reformate gas stream to power an energy-consuming device.
A57 The fuel cell system of paragraph A56, wherein the fuel cell system is configured to provide backup power to the energy-consuming device in response to a primary power source becoming unavailable to power the energy-consuming device.
A58 The fuel cell system of paragraph A56, further comprising:
   an electric resistance heater powered by the primary power source and positioned relative to the heat conductive body to heat the heat conductive body, wherein the heat conductive body is constructed to conduct heat from the electric resistance heater to the reforming conduit to heat the reforming catalyst to within the reforming temperature range during periods in which the primary power source is available;
   wherein the fuel cell system is configured to activate delivery of the fuel-air stream to the burner conduit in response to the primary power source becoming unavailable to power the electric resistance heater.
A59 The fuel cell system of paragraph A58, wherein the electric resistance heater at least partially encircles the heat conductive body.
A60 The fuel cell system of paragraph A58,
   wherein the heat conductive body further defines a heater conduit; and
   wherein the electric resistance heater is positioned at least partially within the heater conduit.
A61 The fuel cell system of paragraph A57, further comprising:
   a battery; and
   an electric resistance heater selectively powered by the battery and positioned relative to the heat conductive body to heat the heat conductive body, wherein the heat conductive body is constructed to conduct heat from the electric resistance heater to the reforming conduit to heat the reforming catalyst to within the reforming temperature range;
   wherein the fuel cell system is configured to power the electric resistance heater with the battery and activate delivery of the fuel-air stream to the burner conduit in response to the primary power source becoming unavailable to power the energy-consuming device.
A62 A method of producing an electrical output using the fuel cell system of any of paragraphs A56-A61.
B1 A method of producing hydrogen gas, the method comprising:
   delivering a fuel-air stream to a burner conduit extending longitudinally through a heat conductive body having a length;
   catalyzing, by a combustion catalyst disposed within the burner conduit only adjacent to the exhaust outlet, ignition of the fuel-air stream in the burner conduit;
   supporting combustion of the fuel-air stream in a combustion region of the burner conduit to produce an exhaust stream;
   delivering a feed stream to a reformer conduit extending longitudinally through the heat conductive body and adjacent the burner conduit;
   conducting heat generated by the exothermic reaction of the combustion of the fuel-air stream in the burner conduit to the reforming conduit;
   catalyzing, by a reforming catalyst in the reformer conduit, production of a reformate gas stream containing hydrogen gas from the feed stream; and
   maintaining the reforming catalyst within a reforming temperature range at least partially from the heat conducted from the burner conduit and wherein the burner conduit extends along a central longitudinal axis of the heat conductive body and the reformer conduit is spaced radially from the burner conduit.
B2 The method of paragraph B1, wherein the reforming conduit extends generally parallel to the burner conduit.
B3 The method of any of paragraphs B1-B2, wherein the combustion region extends only for less than one half of the length of the burner conduit.
B4 The method of any of paragraphs B1-B3, wherein a fuel-air mixing structure is disposed within the burner conduit and is configured to support the combustion of the fuel-air stream in the combustion region of the burner conduit.
B5 The method of paragraph B4, wherein the fuel-air mixing structure is further configured to propagate ignition of the fuel-air stream from the combustion catalyst toward a fuel-air inlet to the burner conduit.
B6 The method of any of paragraphs B4-B5, wherein the fuel-air mixing structure extends between the combustion catalyst and the combustion region.
B7 The method of any of paragraphs B4-B6, wherein the fuel-air mixing structure extends between the combustion catalyst and the fuel-air inlet.
B8 The method of any of paragraphs B4-B7, wherein the fuel-air mixing structure extends adjacent an exhaust outlet from the burner conduit and adjacent the fuel-air inlet.
B9 The method of paragraph B8, wherein the fuel-air mixing structure extends from adjacent the exhaust outlet to adjacent the fuel-air inlet.
B10 The method of paragraph B9, wherein the combustion catalyst is disposed on a portion of the fuel-air mixing structure adjacent the exhaust outlet.
B11 The method of paragraph B9, wherein the combustion catalyst is disposed only on a portion of the fuel-air mixing structure adjacent the exhaust outlet, wherein the portion extends for less than one eighth of the length of the heat conductive body.
B12 The method of paragraph B9, wherein the combustion catalyst is disposed only on a portion of the fuel-air mixing structure adjacent the exhaust outlet, wherein the portion extends for less than one fourth of the length of the heat conductive body.
B13 The method of any of paragraphs B4-B8, wherein the combustion catalyst is disposed in spaced-apart regions of the burner conduit.
B14 The method of any of paragraphs B4-B13, wherein the fuel-air mixing structure is configured to support flameless combustion of the fuel-air stream in the combustion region of the burner conduit.
B15 The method of any of paragraphs B4-B14, wherein the fuel-air mixing structure includes a porous media.
B16 The method of any of paragraphs B4-B15, wherein the porous media includes a ceramic material.
B17 The method of any of paragraphs B4-B16, wherein the porous media includes a metal material.
B18 The method of any of paragraphs B4-B17, wherein the porous media includes packed pellets.
B19 The method of any of paragraphs B4-B18, wherein the porous media includes bundles of fiber.
B20 The method of any of paragraphs B4-B19, wherein the porous media includes a foam material.
B21 The method of any of paragraphs B4-B20, wherein the supporting combustion includes supporting combustion, by the fuel-air mixing structure, in a portion of the burner conduit that extends for less than one half of the length of the burner conduit.
B22 The method of any of paragraphs B4-B20, wherein the fuel-air mixing structure extends only through the combustion region.
B23 The method of any of paragraphs B1-B22, wherein the burner conduit is defined by a burner conduit wall, and wherein the combustion catalyst is disposed only on a portion of the burner conduit wall that adjacent the exhaust outlet from the burner conduit.
B24 The method of paragraph B23, wherein the portion of the burner conduit wall extends for less than one eighth of the length of the burner conduit.
B25 The method of paragraph B23, wherein the portion of the burner conduit wall extends for less than one fourth of the length of the burner conduit.
B26 The method of paragraph B23, wherein the combustion catalyst is disposed on spaced-apart regions of the burner conduit wall.
B27 The method of any of paragraphs B1-B26, further comprising:
   delivering the exhaust stream from the burner conduit to an exhaust conduit extending through the heat conductive body and adjacent the burner conduit; and
   conducting heat from the exhaust stream in the exhaust conduit to the reforming conduit.
B28 The method of paragraph B27, wherein the reformer conduit and the exhaust conduit extend longitudinally through the heat conductive body in a concentric pattern relative to the burner conduit.
B29 The method of any of paragraphs B1-B26,
   wherein the heat conductive body is disposed at least partially within an outer housing in a spaced-apart relation relative to the outer housing to define an exhaust conduit between the heat conductive body and the outer housing, the method further comprising:
   delivering the exhaust stream from the burner conduit to the exhaust conduit; and
   conducting heat from the exhaust stream in the exhaust conduit to the reforming conduit.
B30 The method of any of paragraphs B1-B29, further comprising:
   prior to delivering the feed stream to the reformer conduit, vaporizing liquid portions of the feed stream in a vaporizer conduit extending through the heat conductive body and adjacent the burner conduit; and
   conducting heat generated by the exothermic reaction of the combustion of the fuel-air stream in the burner conduit to the vaporizer conduit.
B31 The method of paragraph B30, wherein the reformer conduit and the vaporizer conduit extend longitudinally through the heat conductive body in a concentric pattern relative to the burner conduit.
B32 The method of any of paragraphs B30-B31, wherein the vaporizer conduit is in fluid communication with the reformer conduit via an end cap manifold coupled to the heat conductive body.
B33 The method of any of paragraphs B1-B32, further comprising:
   prior to the delivering the feed stream, heating the heat conductive body with an electric resistance heater.
B34 The method of paragraph B33, further comprising:
   conducting heat generated by the electric resistance heater to the reforming conduit and heating the reforming catalyst to within the reforming temperature range.
B35 The method of any of paragraphs B33-B34, further comprising:
   deactivating the electric resistance heater in response to the combustion of the fuel-air stream in the burner conduit generating sufficient heat to maintain the reforming catalyst within the reforming temperature range.
B36 The method of any of paragraphs B33-B34, further comprising:
   deactivating the electric resistance heater after a predetermined period of time.
B37 The method of any of paragraphs B23-B36, further comprising:
   conducting heat generated by the electric resistance heater to the burner conduit and heating the combustion catalyst to an ignition temperature at which the combustion catalyst catalyzes the ignition of the fuel-air stream.
B38 The method of any of paragraph B33-B37, wherein the electric resistance heater at least partially encircles the heat conductive body.
B39 The method of any of paragraphs B33-B37, wherein the electric resistance heater is positioned at least partially within a heater conduit defined by the heat conductive body.
B40 The method of any of paragraphs B1-B39, wherein the heat conductive body is at least partially formed from one of extrusion, machining, casting, stamping, brazing, sintering, and welding.
B41 The method of any of paragraphs B1-B40, wherein the heat conductive body is constructed of at least one of aluminum, aluminum alloy, copper, and copper alloy.
B42 The method of any of paragraphs B1-B41, wherein the heat conductive body is not constructed of steel.
B43 The method of any of paragraphs B1-B42, wherein the thermal conductivity of the heat conductive body is one of at least 50%, at least 100%, at least 200%, at least 400%, at least 800%, and at least 1,600% greater than the thermal conductivity of steel.
B44 The method of any of paragraphs B1-B43,
   wherein the reformer conduit is defined by:
   a first reformer-conduit portion extending the length of the heat conductive body;
   a second reformer-conduit portion extending the length of the heat conductive body and in fluid communication with the first reformer-conduit portion via an end cap manifold coupled to the heat conductive body.
B45 The method of any of paragraphs B1-B44, wherein the heat conductive body is free of external heat transfer fins.
B46 The method of any of paragraphs B1-B45, wherein the heat conductive body is constructed of two or more portions joined together.
B47 The method of paragraph B46, wherein the two or more portions are configured to be selectively separated.
B48 The method of paragraph B46, wherein the two or more portions are not configured to be selectively separated.
B49 The method of any of paragraphs B1-B48, wherein the reformate gas stream further contains other gases, the method further comprising:
   after the delivering the reformate gas stream to a hydrogen-purification assembly; and
   separating, by the hydrogen-purification assembly, the reformate gas stream into a permeate stream and a byproduct stream, wherein the permeate stream has at least one of a greater concentration of hydrogen gas and a lower concentration of the other gases than the reformate gas stream, and further wherein the byproduct stream contains at least a substantial portion of the other gases.
B50 The method of paragraph B49, wherein the hydrogen-purification assembly includes at least one hydrogen-selective membrane.
B51 The method of any of paragraphs B49-B50, wherein the hydrogen-purification assembly includes a pressure swing adsorption assembly.
B52 The method of any of paragraphs B49-B50, wherein the hydrogen-purification assembly includes a chemical carbon monoxide removal assembly.
B53 A method of powering an energy-consuming device, comprising:
   the method of any of paragraphs B1-B52; and
   delivering at least a portion of the hydrogen gas of the reformate stream to a fuel cell stack configured to produce an electrical output from an oxidant and the hydrogen gas to power the energy-consuming device.
B54 The method of paragraph B53,
   wherein the delivering the fuel-air-stream and the delivering the feed stream is responsive to a primary power source becoming unavailable to power the energy-consuming device.
B55 The method of paragraph B54, further comprising:
   heating the heat conductive body with an electric resistance heater powered by the primary power source prior to the primary power source becoming unavailable to power the energy-consuming device.
B56 The method of paragraph B54, further comprising:
   heating the heat conductive body with an electric resistance heater powered by a battery in response to the primary power source becoming unavailable to power the energy-consuming device.
B57 The method of any of paragraphs B55-B56, wherein the electric resistance heater at least partially encircles the heat conductive body.
B58 The method of any of paragraphs B55-B56, wherein the electric resistance heater is positioned at least partially within a heater conduit extending into the heat conductive body.
B59 The method of any of paragraphs B1-B58, wherein the heat conductive body includes a monolithic body.
B60 The method of any of paragraphs B1-B58, wherein the heat conductive body is a monolithic body.

### Industrial Applicability

The hydrogen-producing assemblies, fuel cell systems, methods of producing hydrogen gas, and method of powering an energy-consuming device that are disclosed herein are applicable to the hydrogen- and energy-production industries, including the fuel cell industries.

## Claims

1. A hydrogen-producing assembly (12), comprising:
a heat conductive body (140) having a length and defining:
a reforming conduit (210) extending longitudinally through the heat conductive body
(140);
a feed inlet (214) to the reforming conduit (210) for receiving a feed stream (16) into
the reforming conduit (210);
a reformate outlet (216) from the reforming conduit (210) for delivering a reformate
gas stream (20) containing hydrogen gas from the reforming conduit (210);
a burner conduit (212) extending through the heat conductive body (140) along a
central longitudinal axis therein and adjacent the reforming conduit (210), wherein the reforming conduit (210) is spaced radially from the burner conduit (212);
a fuel-air inlet (218) to the burner conduit (212) for receiving a fuel-air stream (64)
into the burner conduit (212); and
an exhaust outlet (220) from the burner conduit (212) for delivering an exhaust
stream (66) from the burner conduit (212);
a reforming catalyst (23) disposed within the reforming conduit (210) and configured to catalyze production of the reformate gas stream (20) from the feed stream (16) via an endothermic reaction within a reforming temperature range;
a combustion catalyst (202) disposed within the burner conduit (212) only adjacent to the exhaust outlet, and configured to catalyze ignition of the fuel-air stream (64) via an exothermic reaction; and
a fuel-air mixing structure (204) disposed within the burner conduit (212) and configured to support combustion of the fuel-air stream (64) in a combustion region of the burner conduit (212) adjacent the fuel-air inlet (218); and
wherein the heat conductive body (140) extends between the burner conduit (212) and the reforming conduit (210), surrounds the burner conduit (212) and the reformer conduit (210) and is constructed to conduct heat generated by the exothermic reaction of the combustion of the fuel-air stream (64) in the burner conduit (212) from the burner conduit (212) to the reforming conduit (210) to maintain the reforming catalyst (23) within the reforming temperature range.

2. The hydrogen-producing assembly (12) of claim 1, wherein the heat conductive body (140) is a monolithic body (143);
optionally wherein the thermal conductivity of the monolithic body is at least 50%
greater than that of steel or a conventional steel alloy;
optionally wherein either:
a) the monolithic body is formed from aluminium or an aluminium alloy; or
b) the monolithic body is formed from aluminium and is formed from a process selected from: brazing and extrusion.

3. The hydrogen-producing assembly (12) of claim 1 or claim 2, further comprising:
at least one end cap manifold (141);
wherein the reforming conduit is defined by:
a first reformer-conduit portion extending the length of the heat conductive body (140); and
a second reformer-conduit portion extending the length of the heat conductive body
(140) and in fluid communication with the first reformer-conduit portion via the at least one end cap manifold (141);
optionally wherein the at least one end cap manifold (141) includes a first end cap manifold and a second end cap manifold;
wherein the second reformer-conduit portion extends the length of the heat conductive body (140) and is in fluid communication with the first reformer-conduit portion via the first end cap manifold; and
wherein the reformer conduit (210) is further defined by a third reformer-conduit portion extending the length of the heat conductive body (140) and is in fluid communication with the second reformer-conduit portion via the second end cap manifold.

4. The hydrogen-producing assembly (12) of claim 1 or claim 2, further comprising:
at least one end cap manifold (141);
wherein the heat conductive body (140) further defines:
a vaporizer conduit (224) extending longitudinally through the heat conductive body (140) and adjacent the burner conduit (212) and spaced radially from the burner conduit (212), wherein the vaporizer conduit (224) is in fluid communication with the reforming conduit (210) via the at least one end cap manifold (141);
a vaporizer inlet (226) to the vaporizer conduit (224) for receiving the feed stream (16) into the vaporizer conduit (224) from a feed source; and
a vaporizer outlet (228) from the vaporizer conduit (224) for delivering the feed stream (16) to the reforming conduit (210) via the at least one end cap manifold (141); and
wherein the heat conductive body (140) is constructed to conduct heat generated by the exothermic reaction of the combustion of the fuel-air stream (64) in the burner conduit (212) from the burner conduit (212) to the vaporizer conduit (224) to vaporize liquid portions of the feed stream (16);
optionally wherein the reformer conduit (210) and the vaporizer conduit (224) extend through the heat conductive body (140) in a concentric pattern relative to the burner conduit (212).

5. The hydrogen-producing assembly (12) of any of claims 1-4, further comprising:
an electric resistance heater (63) positioned relative to the heat conductive body (140) to heat the heat conductive body (140) and wherein the heat conductive body (140) is constructed to conduct heat from the electric resistance heater (63) to the reforming conduit (210) to heat the reforming catalyst (23) to within the reforming temperature range;
further optionally wherein either:
a) the hydrogen-producing assembly (12) is configured to deactivate the electric resistance heater (63) in response to the combustion of the fuel-air stream (64) in the burner conduit (212) generating sufficient heat to maintain the reforming catalyst (23) within the reforming temperature range; or
b) the hydrogen-producing assembly (12) is configured to deactivate the electric resistance heater (63) after a predetermined period of time.

6. The hydrogen-producing assembly (12) of claim 5 wherein:
a) the heat conductive body (140) is constructed to conduct heat from the electric resistance heater (63) to the burner conduit to heat the fuel-air mixing structure (204) to an ignition temperature at which the combustion catalyst (202) catalyzes the ignition of the fuel-air stream (64); and/or
b) the electric resistance heater (63) at least partially encircles the heat conductive body (140); and/or
c) the heat conductive body (140) further defines a heater conduit (65) and the electric resistance heater (63) is positioned at least partially within the heater conduit (65).

7. The hydrogen-producing assembly (12) of any of claims 1-6, wherein the fuel air mixing structure (204) is further configured to propagate ignition of the fuel-air stream (64) from the combustion catalyst (202) toward the fuel-air inlet (218);
optionally wherein the fuel-air mixing structure (204) extends from adjacent the exhaust outlet (220) to adjacent the fuel-air inlet (218), e.g. wherein the combustion catalyst (202) is disposed only on a portion of the fuel-air mixing structure (204) adjacent the exhaust outlet (220), wherein the portion extends for less than one eighth of the length of the heat conductive body (140).

8. The hydrogen-producing assembly (12) of any of claims 1-7, wherein the fuel air mixing structure (204) is configured to support flameless combustion of the fuel-air stream (64) in the combustion region of the burner conduit (212);
optionally wherein the burner conduit (212) is defined by a burner conduit wall (222), and wherein the combustion catalyst (202) is disposed only on a portion of the burner conduit wall (222) adjacent the exhaust outlet (220).

9. The hydrogen-producing assembly (12) of any of claims 1-8, wherein the heat conductive body (140) further defines:
an exhaust conduit (230) extending through the heat conductive body (140) and
adjacent the reforming conduit (210), wherein the exhaust conduit (230) is in fluid communication with the exhaust outlet (220) from the burner conduit (212);
a hot-exhaust inlet (232) to the exhaust conduit (230) for receiving the exhaust stream (66) from the burner conduit (212); and
a cooled-exhaust outlet (234) from the exhaust conduit (230) for delivering the exhaust stream (66) from the exhaust conduit (230); and
wherein the heat conductive body (140) is constructed to conduct heat from the exhaust stream (66) in the exhaust conduit (230) to the reforming conduit (210) to maintain the reforming catalyst (23) within the reforming temperature range.

10. A fuel cell system (42), comprising:
the hydrogen-producing assembly (12) of any of claims 1-9; and
a fuel cell stack (40) in fluid communication with the reformate outlet (216) of the heat conductive body (140) of the hydrogen-producing assembly (12) and configured to produce an electrical output from an oxidant and at least a portion of the hydrogen gas of the reformate gas stream to power an energy-consuming device (46);
optionally wherein the fuel cell system (42) is configured to provide backup power to the energy-consuming device (46) in response to a primary power source becoming unavailable to power the energy-consuming device (46).

11. The use to produce hydrogen of hydrogen-producing assembly (12), comprising:
a monolithic body (143) having a length and defining:
a reforming conduit (210) extending longitudinally through the monolithic body (143);
a feed inlet (214) to the reforming conduit (210) for receiving a feed stream (16) into the reforming conduit (210);
a reformate outlet (216) from the reforming conduit (210) for delivering a reformate gas stream (20) containing hydrogen gas from the reforming conduit (210);
a burner conduit (212) extending longitudinally through the monolithic body (143) and adjacent the reforming conduit (210);
a fuel-air inlet (218) to the burner conduit (212) for receiving a fuel-air stream 64) into the burner conduit (212); and
an exhaust outlet (220) from the burner conduit (212) for delivering an exhaust stream (66) from the burner conduit (212);
a reforming catalyst (23) disposed within the reforming conduit (210) and configured to catalyze production of the reformate gas stream (20) from the feed stream (16) via an endothermic reaction within a reforming temperature range;
wherein the reforming conduit (210) is spaced radially from the burner conduit (212);
a combustion catalyst (202) disposed within the burner conduit (212) only adjacent to the exhaust outlet (220) and configured to catalyze ignition of the fuel-air stream (64) via an exothermic reaction; and
a fuel-air mixing structure (204) disposed within the burner conduit (212) and configured to support combustion of the fuel-air stream (64) in a combustion region of the burner conduit (212) adjacent the fuel-air inlet (218);
wherein the monolithic body (143) extends between the burner conduit (212) and the reforming conduit (210), surrounds the burner conduit (212) and the reformer conduit (210) and is constructed to conduct heat generated by the exothermic reaction of the combustion of the fuel-air stream (64) in the burner conduit (212) from the burner conduit (212) to the reforming conduit (210) to maintain the reforming catalyst (23) within the reforming temperature range.

12. A method of producing hydrogen gas, the method comprising:
delivering a fuel-air stream (64) to a burner conduit (212) extending longitudinally through a heat conductive body (140) having a length;
catalyzing, by a combustion catalyst (202) disposed within the burner conduit (212) only adjacent to the exhaust outlet (220), ignition of the fuel-air stream (64) in the burner conduit (212);
supporting combustion of the fuel-air stream (64) in a combustion region of the burner conduit (212) to produce an exhaust stream (66);
delivering a feed stream (16) to a reforming conduit (210) extending longitudinally through the heat conductive body (140) and adjacent the burner conduit (212);
conducting heat generated by the exothermic reaction of the combustion of the fuel-air stream (64) in the burner conduit (212) to the reforming conduit (210);
catalyzing, by a reforming catalyst (23) in the reforming conduit (210), production of a reformate gas stream (20) containing hydrogen gas from the feed stream (16); and
maintaining the reforming catalyst (23) within a reforming temperature range at least partially from the heat conducted from the burner conduit (212);
wherein the heat conductive body (140) extends between the burner conduit (212) and the reforming conduit (210), surrounds the burner conduit (212) and the reformer conduit (210);
and wherein the burner conduit (212) extends along a central longitudinal axis of the heat conductive body (140) and the reformer conduit (210) is spaced radially from the burner conduit.

13. The method of claim 12, further comprising:
prior to delivering the feed stream (16) to the reformer conduit (210), vaporizing liquid portions of the feed stream (16) in a vaporizer conduit (224) extending through and defined by the heat conductive body (140) and adjacent the burner conduit (212); and
conducting heat generated by the exothermic reaction of the combustion of the fuel-air stream (64) in the burner conduit (212) to the vaporizer conduit (224);
optionally wherein the reformer conduit (210) and the vaporizer conduit (224) extend longitudinally through the heat conductive body (140) in a concentric pattern relative to the burner conduit (212).

14. The method of claim 12 or claim 13, wherein a fuel-air mixing structure (204) is disposed within the burner conduit (212) and is configured to support the combustion of the fuel-air stream (64) in the combustion region of the burner conduit (212);
optionally wherein the fuel-air mixing structure (204) is further configured to propagate ignition of the fuel-air stream (64) from the combustion catalyst (202) toward a fuel-air inlet (218) to the burner conduit (212);
optionally wherein the combustion catalyst (202) is disposed adjacent an exhaust outlet (220) from the burner conduit (212).

## Patentansprüche

1. Wasserstofferzeugende Anordnung (12), umfassend: einen wärmeleitenden Körper (140), der eine Länge aufweist und Folgendes definiert:
eine Reformierungsleitung (210), die sich in Längsrichtung durch den wärmeleitenden Körper (140) erstreckt;
einen Beschickungseinlass (214) zu der Reformierungsleitung (210) zum Aufnehmen eines Beschickungsstroms (16) in die Reformierungsleitung (210);
einen Reformatauslass (216) von der Reformierungsleitung (210) zum Zuführen eines Reformatgasstroms (20), der Wasserstoffgas von der Reformierungsleitung (210) enthält; eine Brennerleitung (212), die sich durch den wärmeleitenden Körper (140) entlang einer Längsmittelachse darin und benachbart zu der Reformierungsleitung (210) erstreckt, wobei die Reformierungsleitung (210) radial von der Brennerleitung (212) beabstandet ist; einen Brennstoff-Luft-Einlass (218) zu der Brennerleitung (212) zum Aufnehmen eines Brennstoff-Luft-Stroms (64) in die Brennerleitung (212); und
einen Abgasauslass (220) von der Brennerleitung (212) zum Zuführen eines Abgasstroms (66) von der Brennerleitung (212);
einen Reformierungskatalysator (23), der in der Reformierungsleitung (210) angeordnet und konfiguriert ist, um eine Erzeugung des Reformatgasstroms (20) von dem Beschickungsstrom (16) über eine endotherme Reaktion in einem Reformierungstemperaturbereich zu katalysieren;
einen Verbrennungskatalysator (202), der in der Brennerleitung (212) lediglich benachbart zu dem Abgasauslass angeordnet und konfiguriert ist, um eine Zündung des Brennstoff-Luft-Stroms (64) über eine exotherme Reaktion zu katalysieren; und
eine Brennstoff-Luft-Mischstruktur (204), die in der Brennerleitung (212) angeordnet und konfiguriert ist, um eine Verbrennung des Brennstoff-Luft-Stroms (64) in einem Verbrennungsbereich der Brennerleitung (212) benachbart zu dem Brennstoff-Luft-Einlass (218) zu unterstützen; und
wobei sich der wärmeleitende Körper (140) zwischen der Brennerleitung (212) und der Reformierungsleitung (210) erstreckt, die Brennerleitung (212) und die Reformierungsleitung (210) umgibt und konstruiert ist, um durch die exotherme Reaktion der Verbrennung des Brennstoff-Luft-Stroms (64) in der Brennerleitung (212) erzeugte Wärme von der Brennerleitung (212) zu der Reformierungsleitung (210) zu leiten, um den Reformierungskatalysator (23) in dem Reformierungstemperaturbereich zu halten.

2. Wasserstofferzeugende Anordnung (12) nach Anspruch 1, wobei der wärmeleitende Körper (140) ein monolithischer Körper (143) ist;
wobei die Wärmeleitfähigkeit des monolithischen Körpers gegebenenfalls mindestens 50 % größer ist als die von Stahl oder einer herkömmlichen Stahllegierung; wobei gegebenenfalls eines von Folgenden gilt:
a) der monolithische Körper ist aus Aluminium oder einer Aluminiumlegierung gebildet; oder
b) der monolithische Körper ist aus Aluminium gebildet und ist mit einem aus Folgendem ausgewählten Verfahren gebildet: Hartlöten und Extrusion.

3. Wasserstofferzeugende Anordnung (12) nach Anspruch 1 oder Anspruch 2, ferner umfassend:
zumindest einen Endkappenverteiler (141); wobei die Reformierungsleitung durch Folgendes definiert ist:
einen ersten Reformierungsleitungsabschnitt, der sich über die Länge des wärmeleitenden Körpers (140) erstreckt; und
einen zweiten Reformierungsleitungsabschnitt, der sich über die Länge des wärmeleitenden Körpers (140) erstreckt und der über den zumindest einen Endkappenverteiler (141) in Fluidverbindung mit dem ersten Reformierungsleitungsabschnitt steht;
wobei der zumindest eine Endkappenverteiler (141) gegebenenfalls einen ersten Endkappenverteiler und einen zweiten Endkappenverteiler beinhaltet;
wobei sich der zweite Reformierungsleitungsabschnitt über die Länge des wärmeleitenden Körpers (140) erstreckt und über den ersten Endkappenverteiler in Fluidverbindung mit dem ersten Reformierungsleitungsabschnitt steht; und
wobei die Reformierungsleitung (210) ferner durch einen dritten Reformierungsleitungsabschnitt definiert ist, der sich über die Länge des wärmeleitenden Körpers (140) erstreckt und über den zweiten Endkappenverteiler in Fluidverbindung mit dem zweiten Reformierungsleitungsabschnitt steht.

4. Wasserstofferzeugende Anordnung (12) nach Anspruch 1 oder Anspruch 2, ferner umfassend:
zumindest einen Endkappenverteiler (141);
wobei der wärmeleitende Körper (140) ferner Folgendes definiert:
eine Verdampferleitung (224), die sich in Längsrichtung durch den wärmeleitenden Körper (140) und benachbart zu der Brennerleitung (212) erstreckt und radial von der Brennerleitung (212) beabstandet ist, wobei die Verdampferleitung (224) über den zumindest einen Endkappenverteiler (141) in Fluidverbindung mit der Reformierungsleitung (210) steht;
einen Verdampfereinlass (226) zu der Verdampferleitung (224) zum Aufnehmen des Beschickungsstroms (16) in die Verdampferleitung (224) von einer Beschickungsquelle; und einen Verdampferauslass (228) von der Verdampferleitung (224) zum Zuführen des Beschickungsstroms (16) zu der Reformierungsleitung (210) über den zumindest einen Endkappenverteiler (141); und
wobei der wärmeleitende Körper (140) konstruiert ist, um durch die exotherme Reaktion der Verbrennung des Brennstoff-Luft-Stroms (64) in der Brennerleitung (212) erzeugte Wärme von der Brennerleitung (212) zu der Verdampferleitung (224) zu leiten, um flüssige Teile des Beschickungsstroms (16) zu verdampfen;
wobei sich die Reformierungsleitung (210) und die Verdampferleitung (224) gegebenenfalls in einem kreisförmigen Muster bezogen auf die Brennerleitung (212) durch den wärmeleitenden Körper (140) erstrecken.

5. Wasserstofferzeugende Anordnung (12) nach einem der Ansprüche 1-4, ferner umfassend: eine elektrische Widerstandsheizung (63), die bezogen auf den wärmeleitenden Körper (140) positioniert ist, um den wärmeleitenden Körper (140) zu erwärmen, und wobei der wärmeleitende Körper (140) konstruiert ist, um Wärme von der elektrischen Widerstandsheizung (63) zu der Reformierungsleitung (210) zu leiten, um den Reformierungskatalysator (23) auf eine Temperatur in dem Reformierungstemperaturbereich zu erwärmen; wobei ferner gegebenenfalls eines von Folgenden gilt:
a) die wasserstofferzeugende Anordnung (12) ist konfiguriert, um die elektrische Widerstandsheizung (63) als Reaktion darauf zu deaktivieren, dass die Verbrennung des Brennstoff-Luft-Stroms (64) in der Brennerleitung (212) eine ausreichende Wärme erzeugt, um den Reformierungskatalysator (23) in dem Reformierungstemperaturbereich zu halten; oder
b) die wasserstofferzeugende Anordnung (12) ist konfiguriert, um die elektrische Widerstandsheizung (63) nach einem vorbestimmten Zeitraum zu deaktivieren.

6. Wasserstofferzeugende Anordnung (12) nach Anspruch 5, wobei:
a) der wärmeleitende Körper (140) konstruiert ist, um Wärme von der elektrischen Widerstandsheizung (63) zu der Brennerleitung zu leiten, um die Brennstoff-Luft-Struktur (204) auf eine Zündtemperatur aufzuwärmen, bei welcher der Verbrennungskatalysator (202) die Zündung des Brennstoff-Luft-Stroms (64) katalysiert; und/oder
b) die elektrische Widerstandsheizung (63) den wärmeleitenden Körper (140) zumindest teilweise umgibt; und/oder
c) der wärmeleitende Körper (140) ferner eine Heizungsleitung (65) definiert und die elektrische Widerstandsheizung (63) zumindest teilweise in der Heizungsleitung (65) positioniert ist.

7. Wasserstofferzeugende Anordnung (12) nach einem der Ansprüche 1-6, wobei die Brennstoff-Luft-Mischstruktur (204) ferner konfiguriert ist, um eine Zündung des Brennstoff-Luft-Stroms (64) von dem Verbrennungskatalysator (202) in Richtung des Brennstoff-Luft-Einlasses (218) auszubreiten;
wobei sich die Brennstoff-Luft-Mischstruktur (204) gegebenenfalls von benachbart zu dem Abgasauslass (220) zu benachbart zu dem Brennstoff-Luft-Einlass (218) erstreckt, wobei der Verbrennungskatalysator (202) z. B. lediglich an einem Abschnitt der Brennstoff-Luft-Mischstruktur (204) benachbart zu dem Abgasauslass (220) angeordnet ist, wobei sich der Abschnitt um weniger als ein Achtel der Länge des wärmeleitenden Körpers (140) erstreckt.

8. Wasserstofferzeugende Anordnung (12) nach einem der Ansprüche 1-7, wobei die Brennstoff-Luft-Mischstruktur (204) konfiguriert ist, um eine flammenlose Verbrennung des Brennstoff-Luft-Stroms (64) in dem Verbrennungsbereich der Verbrennerleitung (212) zu unterstützen;
wobei die Verbrennerleitung (212) gegebenenfalls durch eine Verbrennerleitungswand (222) definiert ist und wobei der Verbrennerkatalysator (202) lediglich an einem Abschnitt der Verbrennerleitungswand (222) benachbart zu dem Abgasauslass (220) angeordnet ist.

9. Wasserstofferzeugende Anordnung (12) nach einem der Ansprüche 1-8, wobei der wärmeleitende Körper (140) ferner Folgendes definiert:
eine Abgasleitung (230), die sich durch den wärmeleitenden Körper (140) und benachbart zu der Reformierungsleitung (210) erstreckt, wobei die Abgasleitung (230) in Fluidverbindung mit dem Abgasauslass (220) von der Verbrennerleitung (212) steht; einen Heißabgasauseinlass (232) zu der Brennerleitung (230) zum Aufnehmen des Abgasstroms (66) von der Brennerleitung (212); und
einen Auslass für gekühltes Abgas (234) von der Abgasleitung (230) zum Zuführen des Abgasstroms (66) von der Abgasleitung (230); und wobei der wärmeleitende Körper (140) konstruiert ist, um Wärme von dem Abgasstrom (66) in die Abgasleitung (230) zu der Reformierungsleitung (210) zu leiten, um den Reformierungskatalysator (23) in dem Reformierungstemperaturbereich zu halten.

10. Brennstoffzellsystem (42), umfassend:
die wasserstofferzeugende Anordnung (12) nach einem der Ansprüche 1-9; und
einen Brennstoffzellenstapel (40) in Fluidverbindung mit dem Reformatauslass (216) des wärmeleitenden Körpers (140) der wasserstofferzeugenden Anordnung (12) und konfiguriert, um eine elektrische Ausgabe von einem Oxidationsmittel und zumindest einem Teil des Wasserstoffgases des Reformatgasstroms zu erzeugen, um ein Energie verbrauchendes Gerät (46) anzutreiben;
wobei das Brennstoffzellsystem (42) gegebenenfalls konfiguriert ist, um dem Energie verbrauchenden Gerät (46) als Reaktion darauf Backup-Leistung bereitzustellen, dass die primäre Leistungsquelle zum Antreiben des Energie verbrauchenden Geräts (46) nicht mehr verfügbar ist.

11. Verwendung zur Erzeugung einer wasserstofferzeugenden Anordnung (12), umfassend:
einen monolithischen Körper (143), der eine Länge aufweist und Folgendes definiert:
eine Reformierungsleitung (210), die sich in Längsrichtung durch den monolithischen Körper (143) erstreckt; einen Beschickungseinlass (214) zu der Reformierungsleitung (210) zum Aufnehmen eines Beschickungsstroms (16) in die Reformierungsleitung (210);
einen Reformatauslass (216) von der Reformierungsleitung (210) zum Zuführen eines Reformatgasstroms (20), der Wasserstoffgas von der Reformierungsleitung (210) enthält; eine Brennerleitung (212), die sich in Längsrichtung durch den monolithischen Körper (143) und benachbart zu der Reformierungsleitung (210) erstreckt;
einen Brennstoff-Luft-Einlass (218) zu der Brennerleitung (212) zum Aufnehmen eines Brennstoff-Luft-Stroms (64) in die Brennerleitung (212); und
einen Abgasauslass (220) von der Brennerleitung (212) zum Zuführen eines Abgasstroms (66) von der Brennerleitung (212);
einen Reformierungskatalysator (23), der in der Reformierungsleitung (210) angeordnet und konfiguriert ist, um eine Erzeugung des Reformatgasstroms (20) von dem Beschickungsstrom (16) über eine endotherme Reaktion in einem Reformierungstemperaturbereich zu katalysieren;
wobei die Reformierungsleitung (210) radial von der Brennerleitung (212) beabstandet ist; einen Verbrennungskatalysator (202), der in der Brennerleitung (212) lediglich benachbart zu dem Abgasauslass (220) angeordnet und konfiguriert ist, um eine Zündung des Brennstoff-Luft-Stroms (64) über eine exotherme Reaktion zu katalysieren; und
eine Brennstoff-Luft-Mischstruktur (204), die in der Brennerleitung (212) angeordnet und konfiguriert ist, um eine Verbrennung des Brennstoff-Luft-Stroms (64) in einem Verbrennungsbereich der Brennerleitung (212) benachbart zu dem Brennstoff-Luft-Einlass (218) zu unterstützen;
wobei sich der monolithische Körper (143) zwischen der Brennerleitung (212) und der Reformierungsleitung (210) erstreckt, die Brennerleitung (212) und die Reformierungsleitung (210) umgibt und konstruiert ist, um durch die exotherme Reaktion der Verbrennung des Brennstoff-Luft-Stroms (64) in der Brennerleitung (212) erzeugte Wärme von der Brennerleitung (212) zu der Reformierungsleitung (210) zu leiten, um den Reformierungskatalysator (23) in dem Reformierungstemperaturbereich zu halten.

12. Verfahren zur Erzeugung von Wasserstoffgas, wobei das Verfahren Folgendes umfasst:
Zuführen eines Brennstoff-Luft-Stroms (64) zu einer Brennerleitung (212), die sich in Längsrichtung durch einen wärmeleitenden Körper (140) erstreckt, der eine Länge aufweist;
Katalysieren einer Zündung des Brennstoff-Luft-Stroms (64) in der Brennerleitung (212) durch einen Verbrennungskatalysator (202), der in der Brennerleitung (212) lediglich benachbart zu dem Abgasauslass (220) angeordnet ist;
Unterstützen einer Verbrennung des Brennstoff-Luft-Stroms (64) in einem Verbrennungsbereich der Brennerleitung (212), um einen Abgasstrom (66) zu erzeugen;
Zuführen eines Beschickungsstroms (16) zu einer Reformierungsleitung (210), die sich in Längsrichtung durch den wärmeleitenden Körper (140) und benachbart zu der Brennerleitung (212) erstreckt;
Leiten von Wärme, die durch die exotherme Reaktion der Verbrennung des Kraftstoff-Luft-Stroms (64) in der Verbrennerleitung (212) erzeugt wurde, zu der Reformierungsleitung (210);
Katalysieren einer Erzeugung eines Reformatgasstroms (20), der Wasserstoffgas von dem Beschickungsstrom (16) enthält, durch einen Reformierungskatalysator (23) in der Reformierungsleitung (210); und
Halten des Reformierungskatalysators (23) in einem Reformierungstemperaturbereich, zumindest teilweise mit der von der Brennerleitung (212) geleiteten Wärme;
wobei sich der wärmeleitende Körper (140) zwischen der Brennerleitung (212) und der Reformierungsleitung (210) erstreckt, die Brennerleitung (212) und die Reformierungsleitung (210) umgibt; und wobei sich die Brennerleitung (212) entlang einer Längsmittelachse des wärmeleitenden Körpers (140) erstreckt und die Reformierungsleitung (210) radial von der Brennerleitung beabstandet ist.

13. Verfahren nach Anspruch 12, ferner umfassend:
vor dem Zuführen des Beschickungsstroms (16) zu der Reformierungsleitung (210), Verdampfen von flüssigen Teilen des Beschickungsstroms (16) in einer Verdampfüngsleitung (224), die sich durch den wärmeleitenden Körper (140) und benachbart zu der Brennerleitung (212) erstreckt und dadurch definiert ist; und Leiten der Wärme, die durch die exotherme Reaktion der Verbrennung des Brennstoff-Luft-Stroms (64) in der Verbrennerleitung (212) erzeugt wird, zu der Verdampferleitung (224);
wobei sich die Reformierungsleitung (210) und die Verdampfungsleitung (224) gegebenenfalls in einem kreisförmigen Muster bezogen auf die Verbrennerleitung (212) in Längsrichtung durch den wärmeleitenden Körper (140) erstrecken.

14. Verfahren nach Anspruch 12 oder Anspruch 13, wobei eine Brennstoff-Luft-Mischstruktur (204) in der Brennerleitung (212) angeordnet und konfiguriert ist, um die Verbrennung des Brennstoff-Luft-Stroms (64) in dem Verbrennungsbereich der Brennerleitung (212) zu unterstützen;
wobei die Brennstoff-Luft-Mischstruktur (204) gegebenenfalls ferner konfiguriert ist, um eine Zündung des Brennstoff-Luft-Stroms (64) von dem Verbrennungskatalysator (202) in Richtung eines Brennstoff-Luft-Einlasses (218) zu der Verbrennerleitung (212) auszubreiten;
wobei der Verbrennungskatalysator (202) gegebenenfalls benachbart zu einem Abgasauslass (220) von der Verbrennerleitung (212) angeordnet ist.

## Revendications

1. Ensemble producteur d'hydrogène (12), comprenant :
un corps thermo-conducteur (140) présentant une longueur, et définissant :
un conduit de reformage (210) s'étendant longitudinalement à travers le corps thermo-conducteur (140) ;
une entrée d'alimentation (214) vers le conduit de reformage (210) pour recevoir un flux d'entrée (16) dans le conduit de reformage (210) ;
une sortie de reformat (216) du conduit de reformage (210) pour refouler un flux de gaz de reformat (20) contenant du gaz hydrogène provenant du conduit de reformage (210) ;
un conduit de brûleur (212) déployé à travers le corps thermo-conducteur (140), le long d'un axe longitudinal central à l'intérieur et adjacent au conduit de reformage (210), le conduit de reformage (210) étant espacé radialement du conduit de brûleur (212) ;
une entrée carburant-air (218) au conduit de brûleur (212) pour recevoir un flux de carburant-air (64) dans le conduit de brûleur (212) ; et
une sortie d'évacuation (220) depuis le conduit de brûleur (212) pour le refoulement d'un flux d'évacuation (66) du conduit de brûleur (212) ;
un catalyseur de reformage (23) disposé au sein du conduit de reformage (210), et configuré pour catalyser la production du flux de gaz de reformat (20) depuis le flux d'entrée (16) par le biais d'une réaction endothermique au sein d'une plage de température de reformage ;
un catalyseur de combustion (202) disposé au sein du conduit de brûleur (212) seulement adjacent à la sortie d'évacuation, et configuré pour catalyser l'allumage du flux de carburant-air (64) par le biais d'une réaction exothermique ; et
une structure de mélange carburant-air (204) disposée au sein du conduit de brûleur (212) et configurée pour supporter la combustion du flux de carburant-air (64) dans une région de combustion du conduit de brûleur (212) adjacente à l'entrée carburant-air (218) ; et
le corps thermo-conducteur (140) s'étendant entre le conduit de brûleur (212) et le conduit de reformage (210), entourant le conduit de brûleur (212) et le conduit de reformage (210), et étant construit pour assurer la conduction de la chaleur produite par la réaction exothermique de la combustion du flux de carburant-air (64) dans le conduit de brûleur (212) du conduit de brûleur (212) au conduit de reformage (210) pour maintenir le catalyseur de reformage (23) au sein de la plage de températures de reformage.

2. Ensemble producteur d'hydrogène (12) selon la revendication 1, le corps thermo-conducteur (140) étant un corps monolithique (143) ;
en option la thermo-conductivité du corps monolithique étant supérieure d'au moins 50 % à celle de l'acier ou d'un alliage d'acier classique ;
en option soit :
a) le corps monolithique est réalisé en aluminium ou en alliage d'aluminium ; soit
b) le corps monolithique est réalisé en aluminium par un des deux procédés suivants : brasage ou extrusion.

3. Ensemble producteur d'hydrogène (12) selon la revendication 1 ou la revendication 2, comprenant en outre :
au moins un collecteur de chapeau d'extrémité (141) ; le conduit de reformage étant défini par :
une première partie à conduit de reformage, s'étendant sur la longueur du corps thermo-conducteur (140) ; et
une deuxième partie à conduit de reformage, s'étendant sur la longueur du corps thermo-conducteur (140), et étant en communication fluidique avec la première partie à conduit de reformage par le biais de l'au moins un collecteur de chapeau d'extrémité (141) ;
en option l'au moins un collecteur de chapeau d'extrémité (141) comprenant un premier collecteur de chapeau d'extrémité et un deuxième collecteur de chapeau d'extrémité ;
la deuxième partie à conduit de reformage s'étendant sur la longueur du corps thermo-conducteur (140), et étant en communication fluidique avec la première partie à conduit de reformage par le biais du premier collecteur de chapeau d'extrémité ; et
le conduit de reformage (210) étant défini en outre par une troisième partie de conduit de reformage s'étendant sur la longueur du corps thermo-conducteur (140), et étant en communication fluidique avec la deuxième partie à conduit de reformage, par le biais du deuxième collecteur de chapeau d'extrémité.

4. Ensemble producteur d'hydrogène (12) selon la revendication 1 ou la revendication 2, comprenant en outre :
au moins un collecteur de chapeau d'extrémité (141) ;
le corps thermo-conducteur (140) définissant en outre :
un conduit vaporisateur (224) s'étendant longitudinalement à travers le corps thermo-conducteur (140) et adjacent au conduit de brûleur (212), espacé radialement du conduit de brûleur (212), le conduit vaporisateur (224) étant en communication fluidique avec le conduit de reformage (210) par le biais de l'au moins un collecteur de chapeau d'extrémité (141) ;
une entrée de vaporisateur (226) dans le conduit de vaporisateur (224) pour recevoir un flux d'entrée (16) dans le conduit vaporisateur (224) depuis une source d'alimentation ; et
une sortie de vaporisateur (228) depuis le conduit de vaporisateur (224) pour le refoulement du flux d'entrée (16) dans le conduit de reformage (210) par le biais de l'au moins un collecteur de chapeau d'extrémité (141) ; et
le corps thermo-conducteur (140) étant fabriqué de façon à assurer la conduction de la chaleur produite par la réaction exothermique de la combustion du flux d'air-carburant (64) dans le conduit de brûleur (212), du conduit de brûleur (212) au conduit de vaporisateur (224) pour vaporiser des parties liquides du flux d'entrée (16) ;
en option le conduit de reformage (210) et le conduit de vaporisateur (224) s'étendant à travers le corps thermo-conducteur (140) dans une configuration concentrique relativement au conduit de brûleur (212).

5. Ensemble producteur d'hydrogène (12) selon une quelconque des revendications 1 à 4, comprenant en outre :
un appareil de chauffage à résistance électrique (63) positionné relativement au corps thermo-conducteur (140) pour chauffer le corps thermo-conducteur (140), le corps thermo-conducteur (140) étant fabriqué de façon à assurer la conduction de la chaleur de l'appareil de chauffage à résistance électrique (63) au conduit de reformage (210) pour chauffer le catalyseur de reformage (23) à une température comprise dans la plage de températures de reformage ;
en outre, dans lequel, en option, soit :
a) l'ensemble producteur d'hydrogène (12) est configuré pour désactiver l'appareil de chauffage à résistance électrique (63) en réponse à la combustion du flux de carburant-air (64) dans le conduit de brûleur (212), en générant une chaleur suffisante pour maintenir le catalyseur de reformage (23) à une température comprise dans la plage de températures de reformage ; soit
b) l'ensemble producteur d'hydrogène (12) est configuré pour désactiver l'appareil de chauffage à résistance électrique (63) au bout d'une période prédéterminée.

6. Ensemble producteur d'hydrogène (12) selon la revendication 5, dans lequel :
a) le corps thermo-conducteur (140) est réalisé de façon à assurer la conduction de la chaleur de l'appareil de chauffage à résistance électrique (63) au conduit du brûleur afin de chauffer la structure de mélange carburant-air (204) à une température d'allumage à laquelle le catalyseur de combustion (202) catalyse l'allumage du flux de carburant-air (64) ; et/ou
b) l'appareil de chauffage à résistance électrique (63) encercle, au moins partiellement le corps thermo-conducteur (140) ; et/ou
c) le corps thermo-conducteur (140) définit en outre un conduit d'appareil de chauffage (65) et l'appareil de chauffage à résistance électrique (63) est positionné au moins partiellement au sein du conduit d'appareil de chauffage (65).

7. Ensemble producteur d'hydrogène (12) selon une quelconque des revendications 1 à 6, dans lequel la structure de mélange carburant-air (204) est configurée en outre pour propager l'allumage du flux de carburant-air (64) du catalyseur de combustion (202) vers l'entrée carburant-air (218) ;
en option la structure de mélange carburant-air (204) s'étendant d'une position adjacente à la sortie d'évacuation (220) à une position adjacente à l'entrée carburant-air (218), p.ex. le catalyseur de combustion (202) étant disposé seulement sur une partie de la structure de mélange carburant-air (204) adjacente à la sortie d'évacuation (220), la partie s'étendant sur moins d'un huitième de la longueur du corps thermo-conducteur (140).

8. Ensemble producteur d'hydrogène (12) selon une quelconque des revendications 1 à 7, dans lequel la structure de mélange carburant-air (204) est configurée en outre pour supporter une combustion sans flammes du flux de carburant-air (64) dans la région de combustion du conduit de brûleur (212) ;
en option, le conduit de brûleur (212) étant défini par une paroi de conduit de brûleur (222), et le catalyseur de combustion (202) étant disposé seulement sur une partie de la paroi du conduit de brûleur (222) adjacente à la sortie d'évacuation (220).

9. Ensemble producteur d'hydrogène (12) selon une quelconque des revendications 1 à 8, dans lequel le corps thermo-conducteur (140) définit en outre :
un conduit d'évacuation (230) s'étendant à travers le corps thermo-conducteur (140) et étant adjacente au conduit de reformage (210), le conduit d'évacuation (230) étant en communication fluidique avec la sortie d'évacuation (220) depuis le conduit de brûleur (212) ;
une entrée d'évacuation chaude (232) au conduit d'évacuation (230) pour recevoir le flux d'évacuation (66) depuis le conduit de brûleur (212) ; et
une sortie d'évacuation refroidie (234) depuis le conduit d'évacuation (230) pour refouler le flux d'évacuation (66) hors du conduit d'évacuation (230) ; et le corps thermo-conducteur (140) étant réalisé pour assurer la conduction de la chaleur du flux d'évacuation (66) dans le conduit d'évacuation (230) au conduit de reformage (210), afin de maintenir le catalyseur de reformage (23) dans la plage de températures de reformage.

10. Système de pile à combustible (42) comprenant :
l'ensemble producteur d'hydrogène (12) selon une quelconque des revendications 1 à 9 ; et
un assemblage de piles à combustible (40) en communication fluidique avec la sortie de reformat (216) du corps thermo-conducteur (140) de l'ensemble producteur d'hydrogène (12), et configuré pour produire une sortie électrique d'un oxydant et d'au moins une partie du gaz hydrogène du flux de gaz de reformat pour alimenter un dispositif à consommation d'énergie (46) ;
en option le système de pile à combustible (42) étant configuré pour fournir une alimentation de secours au dispositif à consommation d'énergie (46) en réponse à l'indisponibilité d'une source d'alimentation principale pour l'alimentation du dispositif à consommation d'énergie (46).

11. L'utilisation, pour produire de l'hydrogène, de l'ensemble producteur d'hydrogène (12), comprenant :
un corps monolithique (143) présentant une longueur, et définissant :
un conduit de reformage (210) s'étendant longitudinalement à travers le corps monolithique (143) ;
une entrée d'alimentation (214) vers le conduit de reformage (210) pour recevoir un flux d'entrée (16) dans le conduit de reformage (210) ;
une sortie de reformat (216) du conduit de reformage (210) pour refouler un flux de gaz de reformat (20) contenant du gaz hydrogène provenant du conduit de reformage (210) ;
un conduit de brûleur (212) s'étendant longitudinalement à travers le corps monolithique (143), et adjacent au conduit de reformage (210) ;
une entrée carburant-air (218) au conduit de brûleur (212) pour recevoir un flux de carburant-air (64) dans le conduit de brûleur (212) ; et
une sortie d'évacuation (220) depuis le conduit de brûleur (212) pour distribuer un flux d'évacuation (66) du conduit de brûleur (212) ;
un catalyseur de reformage (23) disposé au sein du conduit de reformage (210), et configuré pour catalyser la production du flux de gaz de reformat (20) depuis le flux d'entrée (16) par le biais d'une réaction endothermique au sein d'une plage de température de reformage ;
le conduit de reformage (210) étant espacé radialement du conduit de brûleur (212) ;
un catalyseur de combustion (202) disposé au sein du conduit de brûleur (212) seulement adjacent à la sortie d'évacuation (200), et configuré pour catalyser l'allumage du flux de carburant-air (64) par le biais d'une réaction exothermique ; et
une structure de mélange carburant-air (204) disposée au sein du conduit de brûleur (212) et configurée pour supporter la combustion du flux de carburant-air (64) dans une région de combustion du conduit de brûleur (212) adjacente à l'entrée carburant-air (218) ; et
le corps monolithique (143), s'étendant entre le conduit de brûleur (212) et le conduit de reformage (210), entourant le conduit de brûleur (212) et le conduit de reformage (210), et étant construit pour assurer la conduction de la chaleur produite par la réaction exothermique de la combustion du flux de carburant-air (64) dans le conduit de brûleur (212) du conduit de brûleur (212) au conduit de reformage (210) pour maintenir le catalyseur de reformage (23) au sein de la plage de températures de reformage.

12. Méthode de production de gaz hydrogène, la méthode comprenant :
la distribution d'un flux carburant-air (64) dans un conduit de brûleur (212) s'étendant longitudinalement à travers un corps thermo-conducteur (140) possédant une longueur ;
la catalyse, par un catalyseur de combustion (202) disposé au sein du conduit de brûleur (212) seulement adjacent à la sortie d'évacuation (220), l'allumage du flux de carburant-air (64) dans le conduit de brûleur (212) ;
le support de la combustion flux carburant-air (64) dans une région de combustion du conduit de brûleur (212) pour produire un flux d'évacuation (66) ;
la distribution d'un flux d'entrée (16) dans un conduit de reformage (210) s'étendant longitudinalement à travers le corps thermo-conducteur (140) et adjacent au conduit de brûleur (212) ;
la conduction de la chaleur produite par la réaction exothermique de la combustion du flux carburant-air (64) dans le conduit de brûleur (212) au conduit de reformage (210) ;
la catalyse, par un catalyseur de reformage (23) dans le conduit de reformage (210), de la production d'un flux de gaz de reformat (20) contenant du gaz hydrogène provenant du flux d'entrée (16) ; et
le maintien du catalyseur de reformage (23) dans une plage de température de reformage au moins partiellement avec la chaleur conduite depuis le conduit de brûleur (212) ;
le corps thermo-conducteur (140) s'étendant entre le conduit de brûleur (212) et le conduit de reformage (210), entourant le conduit de brûleur (212) et le conduit de reformage (210) ; et le conduit de brûleur (212) s'étendant le long d'un axe longitudinal central du corps thermo-conducteur (140), et le conduit de reformage (210) étant espacé radialement du conduit du brûleur.

13. Méthode selon la revendication 12, comprenant en outre :
préalablement à la distribution du flux d'entrée (16) dans le conduit de reformage (210), la vaporisation de parties liquides du flux d'entrée (16) dans un conduit vaporisateur (224) déployé à travers celui-ci, et défini par le corps thermo-conducteur (140) et adjacent au conduit de brûleur (212) ; et
la conduction de la chaleur produite par la réaction exothermique de la combustion du flux carburant-air (64) dans le conduit de brûleur (212) au conduit vaporisateur (224) ; en option le conduit de reformage (210) et le conduit vaporisateur (224) s'étendant longitudinalement à travers le corps thermo-conducteur (140) dans une configuration concentrique relativement au conduit de brûleur (212).

14. Méthode selon la revendication 12 ou la revendication 13, une structure de mélange carburant-air (204) étant disposée au sein du conduit de brûleur (212), et étant configurée pour supporter la combustion du flux de carburant-air (64) dans la région de combustion du conduit de brûleur (212) ;
en option, la structure de mélange carburant-air (204) étant configurée en outre pour propager l'allumage du flux de carburant-air (64) du catalyseur de combustion (202) vers une entrée carburant-air (218) au conduit de brûleur (212) ;
en option, le catalyseur de combustion (202) étant disposé dans une position adjacente à une sortie d'évacuation (220) depuis le conduit de brûleur (212).
